# EUROPEAN PATENT SPECIFICATION

(11) **EP 4 039 440 B1**
(45) Date of publication and mention of the grant of the patent: **23.08.2023**
(21) Application number: 22153349.0
(22) Date of filing: 26.01.2022
(51) Int. Cl.: B29C 45/06, B29C 45/76, B29C 45/80

(54) **INJECTION MOLDING MACHINE**
SPRITZGIESSMASCHINE
MACHINE DE MOULAGE À INJECTION

(30) Priority: 29.01.2021 JP 2021013838
(43) Date of publication of application: 10.08.2022
(73) Proprietor: SUMITOMO HEAVY INDUSTRIES, LTD., Tokyo 141-6025 (JP)
(72) Inventor: ISHII, Yoshihisa, Chiba, 263-0001 (JP); SAWAYA, Atsushi, Chiba, 263-0001 (JP); ONUKI, Masaya, Chiba, 263-0001 (JP)
(74) Representative: Louis Pöhlau Lohrentz

(56) References cited:
- WO-A1-2015/038721
- JP-A- S6 464 819
- JP-U- 3 124 611

## Description

### BACKGROUND OF THE INVENTION

### Field of the Invention

The present invention relates to an injection molding machine.

### Description of Related Art

In the related art, in an injection molding machine, a technique for performing rotation control on a rotary table in which three or more mold units are disposed has been proposed. For example, Japanese Registered Utility Model No. JP 3124611 U has proposed a technique in which a rotary table provided with three mold units at an angular interval of 120° is controlled in a set of 120° rotation by two degrees in one direction and 240° rotation by one degree in a direction opposite to the one direction. International Patent Publication No. WO 2015-038721 A1 discloses that an injection molding machine includes first and second molds each having a first mold portion and a second mold portion used to form a molded part.

Specifically, since the rotation control is performed in units of the above-described set, a disposition of a wiring and a pipe which are fixed to the rotary table returns to an original disposition. Therefore, the wiring and the piping can be easily handled.

### SUMMARY OF THE INVENTION

According to the technique disclosed in Japanese Registered Utility Model No. JP 3 124611 U, when a rotation speed of the rotary table is constant, a rotation time varies between 120° rotation in one direction and 240° rotation in the direction opposite to the one direction. When the rotation time varies, in some situations, a time required for a process performed for each mold unit may vary.

For example, when the mold units are disposed in order at three positions on the rotary table, a second position is a position for cooling the mold unit. When a cooling period is set until the process starts at a third position after the process is completed at a first position, the cooling period varies in each mold unit.

One aspect of the present invention is to provide a technique for reducing variations in quality of molding products by reducing a time difference between processes performed for each mold unit.

The invention is set out in the appended set of claims.

According to an aspect of the present invention, a time difference between respective processes for each mold unit can be reduced. Therefore, variations in quality of a molding product can be reduced.

### BRIEF DESCRIPTION OF THE DRAWINGS

FIG. 1 is a view illustrating a state when mold opening is completed in an injection molding machine according to an embodiment.
FIG. 2 is a sectional view illustrating a state when platen opening is completed in an injection molding machine according to the embodiment.
FIG. 3 is a sectional view illustrating a state when mold clamping is performed in the injection molding machine according to the embodiment.
FIG. 4 is a sectional view illustrating an ejector unit of the injection molding machine according to the embodiment.
FIGS. 5A to 5C are sectional views illustrating an example of the ejector unit while an ejection operation is performed.
FIG. 6 is a functional block diagram illustrating components of a control device according to the embodiment.
FIGS. 7A to 7D are views illustrating transitions of a rotary table 121 on which rotation control is performed by a rotation control unit of the control device according to the embodiment.
FIG. 8 is a view illustrating a time required for a process in each state of the rotary table 121 when time adjustment is not performed.
FIG. 9 is a view illustrating a setting screen relating to the rotation control of the rotary table for reducing a difference in cooling periods, which is displayed by a display processing unit according to the embodiment.
FIG. 10 is a view illustrating a time required for a process in each rotation state of the rotary table when adjustment relating to rotation control is performed in the control device according to the embodiment.
FIG. 11 is a flowchart illustrating a procedure of all processes performed by the injection molding machine according to the embodiment.
FIG. 12 is a flowchart illustrating a procedure of all processes performed by an injection molding machine according to Modification Example 1.
FIG. 13 is a view illustrating a disposition of a mold unit in a rotary table according to Modification Example 3.

### DETAILED DESCRIPTION OF THE INVENTION

Hereinafter, embodiments of the present invention will be described with reference to the drawings. In each drawing, the same reference numerals will be assigned to the same or corresponding configurations, and description thereof may be omitted.

### Injection Molding Machine

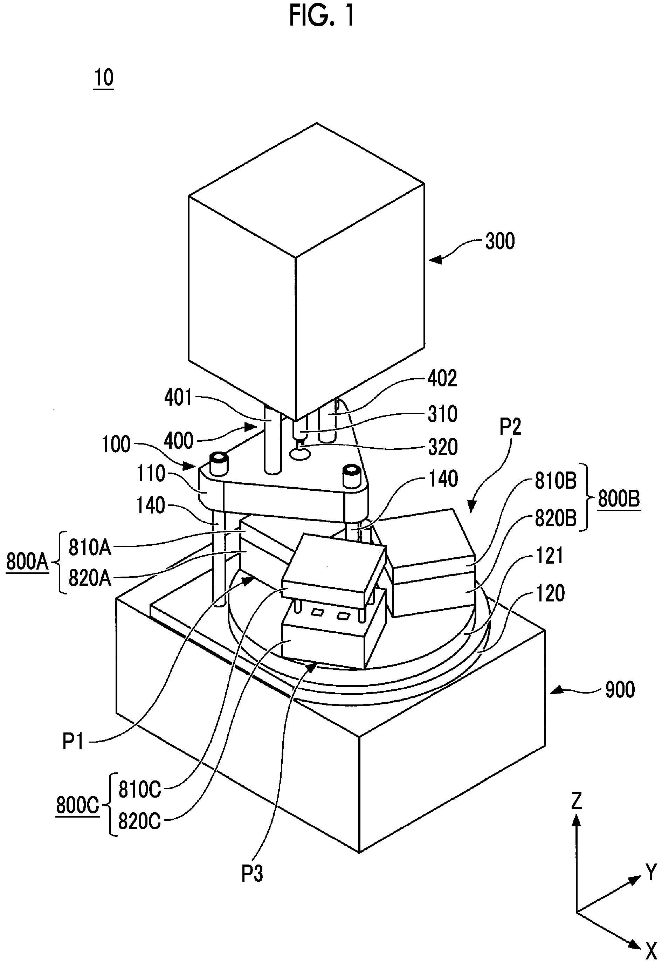

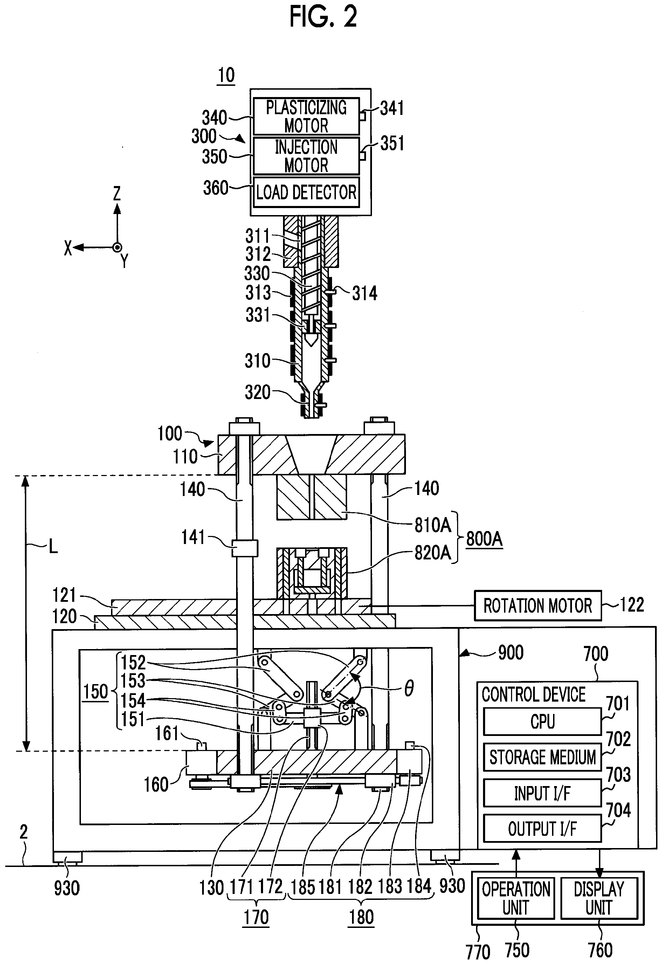

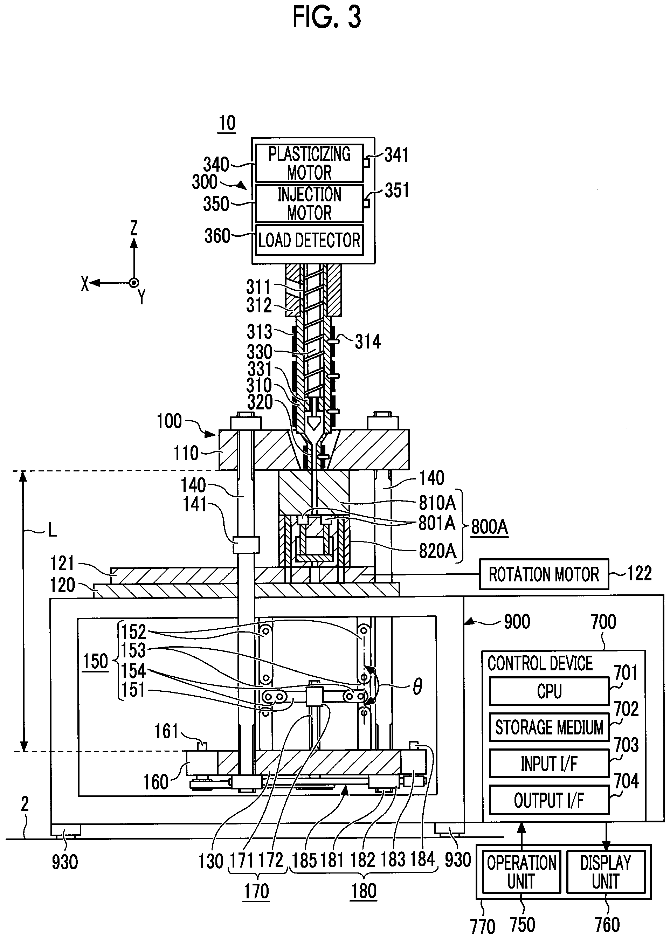

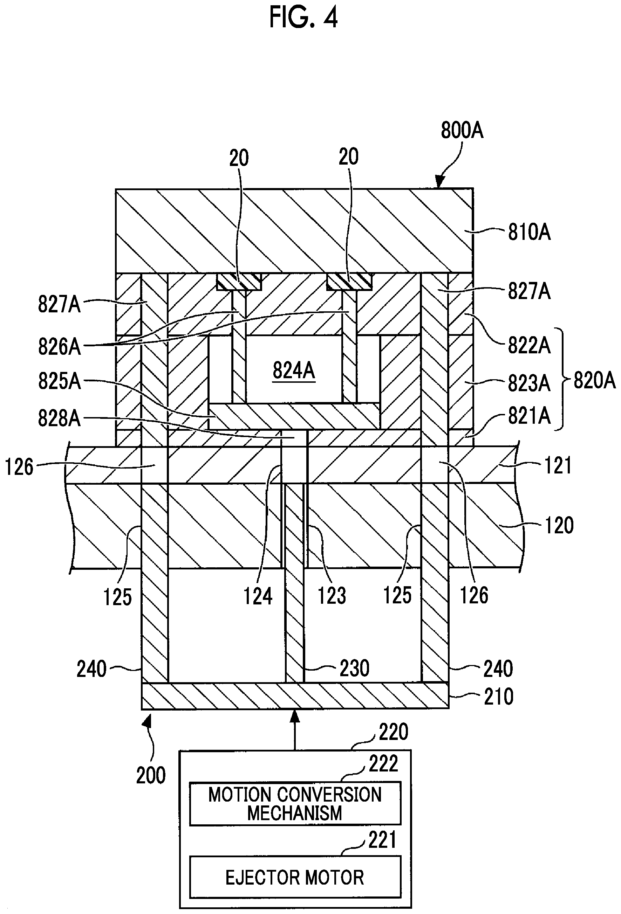

FIG. 1 is a perspective view illustrating a state when platen opening is completed in an injection molding machine according to the embodiment. FIG. 2 is a sectional view illustrating a state when the platen opening is completed in the injection molding machine according to the embodiment. FIG. 3 is a sectional view illustrating a state when mold clamping is performed in the injection molding machine according to the embodiment. FIG. 4 is a sectional view illustrating an ejector unit of the injection molding machine according to the embodiment. In the present specification, an X-axial direction, a Y-axial direction, and a Z-axial direction are perpendicular to each other. The X-axial direction and the Y-axial direction represent a horizontal direction, and the Z-axial direction represents a vertical direction. When a mold clamping unit 100 is a vertical type, the Z-axial direction is a mold clamping direction.

As illustrated in FIGS. 1 to 4, an injection molding machine 10 includes the mold clamping unit 100 that performs mold clamping of mold units 800A, 800B, and 800C, an ejector unit 200 that ejects a molding product 20 molded by the mold units 800A, 800B, and 800C, an injection unit 300 that injects a molding material into the mold units 800A, 800B, and 800C, a moving unit 400 that raises and lowers the injection unit 300 with respect to the mold units 800A, 800B, and 800C, a control device 700 that controls each component of the injection molding machine 10, and a frame 900 that supports each component of the injection molding machine 10. The frame 900 is installed on a floor surface 2 via a leveling adjuster 930. Hereinafter, each component of the injection molding machine 10 will be described.

### Mold Clamping Unit

As illustrated in FIG. 1, the mold clamping unit 100 sequentially performs mold clamping of a plurality of the mold units 800A, 800B, and 800C. The mold unit 800A includes an upper die 810A and a lower die 820A, the mold unit 800B includes an upper die 810B and a lower die 820B, and the mold unit 800C includes an upper die 810C and a lower die 820C. The mold units 800A, 800B, and 800C have the same configuration.

For example, the mold clamping unit 100 is a vertical type, and the mold clamping direction is a vertical direction. The mold clamping unit 100 includes an upper platen 110 that sequentially presses a plurality of the upper dies 810A, 810B, and 810C from above, a rotary table 121 to which the lower dies 820A, 820B, and 820C are attached, a rotation motor 122 that rotates the rotary table 121, and a lower platen 120 that supports the rotary table 121 from below.

The upper platen 110 is disposed above the lower platen 120 and the rotary table 121, and can be raised and lowered with respect to the frame 900. A lower surface of the upper platen 110 sequentially presses the plurality of upper dies 810A, 810B, and 810C placed on the rotary table 121 from above.

On the other hand, the lower platen 120 is fixed to the frame 900. The rotary table 121 is placed to be rotatable on a surface (upper surface) facing the upper platen 110 in the lower platen 120. The plurality of lower dies 820A, 820B, and 820C are attached to an upper surface of the rotary table 121.

The rotation motor 122 rotates the rotary table 121 so that the plurality of mold units 800A, 800B, and 800C are respectively and sequentially disposed at a first position P1, a second position P2, and a third position P3. In FIG. 1, the mold unit 800A is disposed at the first position P1, the mold unit 800B is disposed at the second position P2, and the mold unit 800C is disposed at the third position P3.

For example, the first position P1 is a molding position where mold clamping and injection are performed. The second position P2 is a cooling position where the molding product 20 is cooled. The third position P3 is, for example, an ejector position where the molding product 20 is ejected. The third position P3 may also serve as mold open and close positions where mold opening and closing are performed. In addition, the third position P3 may also serve as an insert position where an insert material is set in the lower dies 820A, 820B, and 820C.

Processes performed at stop positions (including the first position P1, the second position P2, and the third position P3) of the mold unit are not limited to the above-described combination. In addition, the number of the stop positions of the mold unit may be the same as the number of the mold units, and may be four or more without being limited to three. For example, an ejector position and an insert position may be individually set.

As illustrated in FIGS. 2 and 3, the mold clamping unit 100 includes a toggle support 130 disposed below the lower platen 120, a tie bar 140 that connects the upper platen 110 and the toggle support 130 to each other, a toggle mechanism 150 disposed between the lower platen 120 and the toggle support 130, a mold clamping motor 160 that operates the toggle mechanism 150, a motion conversion mechanism 170 that converts a rotary motion into a linear motion of the mold clamping motor 160, and a mold space adjustment mechanism 180 that adjusts an interval L between the upper platen 110 and the toggle support 130.

The toggle support 130 can be raised and lowered with respect to the frame 900 below the lower platen 120. The toggle support 130 is connected to the upper platen 110 by the tie bar 140. The upper platen 110 is raised and lowered by raising and lowering the toggle support 130.

The tie bar 140 connects the upper platen 110 and the toggle support 130 to each other at the interval L in the mold clamping direction. A plurality of (for example, three) the tie bars 140 may be used. The plurality of tie bars 140 are disposed parallel to each other in the mold clamping direction, and extend in accordance with a mold clamping force. At least one of the tie bars 140 may be provided with a tie bar strain detector 141 that detects a strain of the tie bar 140. The tie bar strain detector 141 transmits a signal indicating a detection result thereof to the control device 700. The detection result of the tie bar strain detector 141 is used in detecting the mold clamping force.

In the present embodiment, as a mold clamping force detector for detecting the mold clamping force, the tie bar strain detector 141 is used. However, the present invention is not limited thereto. The mold clamping force detector is not limited to a strain gauge type. The mold clamping force detector may be a piezoelectric type, a capacitive type, a hydraulic type, or an electromagnetic type, and an attachment position thereof is not limited to the tie bar 140.

The toggle mechanism 150 is disposed between the lower platen 120 and the toggle support 130, and raises and lowers the toggle support 130 with respect to the lower platen 120. The toggle mechanism 150 includes a crosshead 151 that moves in the mold clamping direction, and a pair of link groups bent and stretched by a movement of the crosshead 151. Each of the pair of link groups has a first link 152 and a second link 153 which are connected to be freely bent and stretched by a pin. The first link 152 is oscillatingly attached to the lower platen 120 by a pin. The second link 153 is oscillatingly attached to the toggle support 130 by a pin. The second link 153 is attached to the crosshead 151 via a third link 154. When the crosshead 151 is relatively raised and lowered with respect to the toggle support 130, the first link 152 and the second link 153 are bent and stretched, and the toggle support 130 is raised and lowered with respect to the lower platen 120.

A configuration of the toggle mechanism 150 is not limited to configurations illustrated in FIGS. 2 and 3. For example, in FIGS. 2 and 3, the number of nodes in each link group is five, but may be four. One end portion of the third link 154 may be connected to the node between the first link 152 and the second link 153.

The mold clamping motor 160 is attached to the toggle support 130, and operates the toggle mechanism 150. The mold clamping motor 160 relatively raises and lowers the crosshead 151 with respect to the toggle support 130. In this manner, the first link 152 and second link 153 are bent and stretched to raise and lower the upper platen 110. The mold clamping motor 160 is connected to the motion conversion mechanism 170 via a belt or a pulley, but may be directly connected to the motion conversion mechanism 170.

The motion conversion mechanism 170 converts a rotary motion of the mold clamping motor 160 into a linear motion of the crosshead 151. The motion conversion mechanism 170 includes a screw shaft and a screw nut screwed to the screw shaft. A ball or a roller may be interposed between the screw shaft and the screw nut. The screw shaft is supported to be rotatable by the toggle support 130, and the screw nut is fixed to the crosshead 151. When the mold clamping motor 160 is driven to rotate the screw shaft, the screw nut and the crosshead 151 are relatively raised and lowered with respect to the toggle support 130. In this manner, the first link 152 and the second link 153 are bent and stretched, and the toggle support 130 is raised and lowered.

The mold clamping motor 160 of the present embodiment is attached to the toggle support 130, but may be attached to the frame 900. In this case, an upper end portion of the screw shaft may be supported to be rotatable by the crosshead 151, a lower end portion of the screw shaft may be spline-coupled to a rotating member held to be rotatable by the frame 900, and the screw nut may be fixed to the toggle support 130. When the mold clamping motor 160 is driven to rotate the rotating member, the screw shaft is raised and lowered while rotating, and the crosshead 151 is relatively raised and lowered with respect to the toggle support 130. In this manner, the first link 152 and the second link 153 are bent and stretched, and the toggle support 130 is raised and lowered.

The mold clamping unit 100 performs a platen closing process, a pressurizing process, a mold clamping process, a depressurizing process, a platen opening process, and a table rotating process under the control of the control device 700. The platen closing process is a process of lowering the upper platen 110 and causing the upper platen 110 to touch the upper surface of the upper dies 810A, 810B, and 810C. The pressurizing process is a process of further lowering the upper platen 110 to generate a mold clamping force. The mold clamping process is a process of stopping the upper platen 110 to maintain the mold clamping force generated in the pressurizing process. The depressurizing process is a process of raising the upper platen 110 to reduce the mold clamping force generated in the pressurizing process. The platen opening process is a process of further raising the upper platen 110 to separate the upper platen 110 from the upper dies 810A, 810B, and 810C. The table rotating process is a process of rotating the rotary table 121. For example, the table rotating process is performed after the platen opening process is completed and before the subsequent platen closing process starts.

In the platen closing process, the mold clamping motor 160 is driven to relatively raise the crosshead 151 with respect to the toggle support 130 to a platen closing completion position at a set movement speed. In this manner, the upper platen 110 is lowered to cause the upper platen 110 to touch the upper surface of the upper dies 810A, 810B, and 810C. For example, a position or a movement speed of the crosshead 151 is detected by using a mold clamping motor encoder 161. The mold clamping motor encoder 161 detects rotation of the mold clamping motor 160, and transmits a signal indicating a detection result thereof to the control device 700.

A crosshead position detector for detecting a position of the crosshead 151 and a crosshead movement speed detector for measuring a movement speed of the crosshead 151 are not limited to the mold clamping motor encoder 161, and a general detector can be used. In addition, an upper platen position detector for detecting a position of the upper platen 110 and an upper platen movement speed detector for measuring a movement speed of the upper platen 110 are not limited to the mold clamping motor encoder 161, and a general detector can be used.

In the pressurizing process, the mold clamping motor 160 is further driven to relatively raise the crosshead 151 with respect to the toggle support 130 from the platen closing completion position to a mold clamping position. In this manner, the upper platen 110 is lowered to generate the mold clamping force.

In the mold clamping process, the mold clamping motor 160 is driven to maintain a position of the crosshead 151 at the mold clamping position. In the mold clamping process, the mold clamping force generated in the pressurizing process is maintained. In the mold clamping process, a cavity space is formed between the upper dies 810A, 810B, and 810C and the lower dies 820A, 820B, and 820C. For example, as illustrated in FIG. 3, in the mold clamping process, a cavity space 801A is formed between the upper die 810A and the lower die 820A. The injection unit 300 fills the cavity space with a liquid molding material. The molding product 20 (refer to FIG. 4) is obtained by solidifying the molding material filling the cavity space.

For example, the number of the cavity spaces 801A is two or more, and a plurality of the molding products 20 can be obtained at the same time. The number of the cavity spaces 801A may be one. In addition, an insert material may be disposed in a portion of the cavity space 801A, and the other portion of the cavity space 801A may be filled with the molding material. In this case, the molding product 20 in which the insert material and the molding material are integrated with each other can be obtained.

In the depressurizing process, the mold clamping motor 160 is driven to relatively lower the crosshead 151 with respect to the toggle support 130 from the mold clamping position to a platen opening start position. In this manner, the upper platen 110 is raised to reduce the mold clamping force. The platen opening start position and the platen closing completion position may be the same position.

In the platen opening process, the mold clamping motor 160 is driven to further relatively lower the crosshead 151 from the platen opening start position to the platen opening completion position at a set movement speed. In this manner, the upper platen 110 is raised to separate the upper platen 110 from the upper dies 810A, 810B, and 810C.

After the platen opening process is completed and before the subsequent platen closing process starts, the table rotating process is performed. In the table rotating process, the rotary table 121 is rotated to rotate the mold units 800A, 800B, and 800C. The plurality of mold units 800A, 800B, and 800C are respectively and sequentially disposed at the first position P1, the second position P2, and the third position P3. A rotation direction of the rotary table 121 may be switched between a first direction and a second direction opposite to the first direction. The rotation directions are switched so that a disposition of a wiring or a pipe fixed to the rotary table 121 is restored. Therefore, the wiring or the piping can be easily handled.

Setting conditions in the platen closing process and the pressurizing process are collectively set as a series of setting conditions. For example, the movement speed or positions of the crosshead 151 (including the platen closing start position, the movement speed switching position, the platen closing completion position, and the mold clamping position) and the mold clamping force in the platen closing process and the pressurizing process are collectively set as a series of setting conditions. The platen closing start position, the movement speed switching position, the platen closing completion position, and the mold clamping position are aligned in this order from a lower side toward an upper side, and represent a start point and an end point of a section in which the movement speed is set. The movement speed is set for each section. The number of the movement speed switching positions may be one or more. The movement speed switching position may not be set. Only one of the mold clamping position and the mold clamping force may be set.

The setting conditions in the depressurizing process and the platen opening process are set in the same manner. For example, the movement speed or positions (the platen opening start position, the movement speed switching position, and the platen opening completion position) of the crosshead 151 in the depressurizing process and the platen opening process are collectively set as a series of setting conditions. The platen opening start position, the movement speed switching position, and the platen opening completion position are aligned in this order from the upper side toward the lower side, and represent the start point and the end point of the section in which the movement speed is set. The movement speed is set for each section. The number of the movement speed switching positions may be one or more. The movement speed switching position may not be set. The platen opening start position and the platen closing completion position may be the same position. In addition, the platen opening completion position and the platen closing start position may be the same position.

Instead of the movement speed or the position of the crosshead 151, the movement speed or the positions of the upper platen 110 may be set. In addition, instead of the position (for example, the mold clamping position) of the crosshead 151 or the position of the upper platen 110, the mold clamping force may be set.

Incidentally, the toggle mechanism 150 amplifies a driving force of the mold clamping motor 160, and transmits the driving force to the upper platen 110. An amplification magnification is referred to as a toggle magnification. The toggle magnification is changed according to an angle θ (hereinafter, also referred to as a "link angle θ") formed between the first link 152 and the second link 153. The link angle θ is obtained from the position of the crosshead 151. When the link angle θ is 180°, the toggle magnification is maximized.

When a mold space of the mold units 800A, 800B, and 800C is changed due to replacement of the mold units 800A, 800B, and 800C or a temperature change in the mold units 800A, 800B, and 800C, mold space adjustment is performed so that a predetermined mold clamping force is obtained during the mold clamping. For example, in the mold space adjustment, the interval L between the upper platen 110 and the toggle support 130 is adjusted so that a link angle θ of the toggle mechanism 150 becomes a predetermined angle when the upper platen 110 touches the upper dies 810A, 810B, and 810C.

The mold clamping unit 100 has the mold space adjustment mechanism 180. The mold space adjustment mechanism 180 performs the mold space adjustment by adjusting the interval L between the upper platen 110 and the toggle support 130. For example, a timing for the mold space adjustment is after the platen opening process is completed and before the subsequent platen closing process starts. For example, the mold space adjustment mechanism 180, includes a screw shaft 181 formed in a lower end portion of the tie bar 140, a screw nut 182 held by the toggle support 130 to be rotatable and not to be raised and lowered, and a mold space adjustment motor 183 that rotates the screw nut 182 screwed to the screw shaft 181.

The screw shaft 181 and the screw nut 182 are provided for each of the tie bars 140. A rotational driving force of the mold space adjustment motor 183 may be transmitted to a plurality of the screw nuts 182 via a rotational driving force transmitting unit 185. The plurality of screw nuts 182 can be rotated in synchronization with each other. The plurality of screw nuts 182 can be individually rotated by changing a transmission channel of the rotational driving force transmitting unit 185.

For example, the rotational driving force transmitting unit 185 is configured to include a gear. In this case, a driven gear is formed on an outer periphery of each screw nut 182, a driving gear is attached to an output shaft of the mold space adjustment motor 183, and a plurality of intermediate gears meshing with the driven gear and the driving gear are held to be rotatable in a central portion of the toggle support 130. The rotational driving force transmitting unit 185 may be configured to include a belt or a pulley instead of the gear.

An operation of the mold space adjustment mechanism 180 is controlled by the control device 700. The control device 700 drives the mold space adjustment motor 183 to rotate the screw nut 182. As a result, the position of the toggle support 130 with respect to the tie bar 140 is adjusted, and the interval L between the upper platen 110 and the toggle support 130 is adjusted. In addition, a plurality of the mold space adjustment mechanisms may be used in combination.

The interval L is detected by using the mold space adjustment motor encoder 184. The mold space adjustment motor encoder 184 detects a rotation amount or a rotation direction of the mold space adjustment motor 183, and transmits a signal indicating a detection result thereof to the control device 700. The detection result of the mold space adjustment motor encoder 184 is used in monitoring or controlling the position or the interval L of the toggle support 130. A toggle support position detector for detecting the position of the toggle support 130 and an interval detector for detecting the interval L are not limited to the mold space adjustment motor encoder 184, and a general detector can be used.

The mold clamping unit 100 may have a mold temperature controller that adjusts the temperature of the mold units 800A, 800B, and 800C. The mold units 800A, 800B, and 800C have a flow path of the temperature control medium inside thereof. The mold temperature controller adjusts the temperature of the mold units 800A, 800B, and 800C by adjusting the temperature of a temperature control medium supplied to a flow path of the mold units 800A, 800B, and 800C.

The mold clamping unit 100 of the present embodiment is the vertical type in which the mold clamping direction is a vertical direction, but may be a horizontal type in which the mold clamping direction is a horizontal direction.

The mold clamping unit 100 of the present embodiment includes the mold clamping motor 160 as a drive source . However, a hydraulic cylinder may be provided instead of the mold clamping motor 160.

### Ejector Unit

The ejector unit 200 ejects the molding product 20 from the mold units 800A, 800B, and 800C. Since the mold units 800A, 800B, and 800C have the same configuration, an operation for ejecting the molding product 20 from the mold unit 800A will be typically described.

First, a structure of the mold unit 800A will be described with reference to FIG. 4. The mold unit 800A includes an upper die 810A and a lower die 820A. The lower die 820A includes an attachment plate 821A to be attached the rotary table 121, a die plate 822A forming a cavity space 801A, and an intermediate plate 823A forming a space 824A between the attachment plate 821A and the die plate 822A. The intermediate plate 823A is also called a spacer block.

The lower die 820A further includes an ejector plate 825A disposed to be freely raised and lowered in the space 824A, and a rod-shaped ejector pin 826A extending upward from the ejector plate 825A. The ejector plate 825A is biased downward by a return spring (not illustrated), and is pressed against the attachment plate 821A.

The ejector pin 826A is inserted to be freely raised and lowered into a pin hole penetrating the die plate 822A in the vertical direction. In a state where the ejector plate 825A is pressed against the attachment plate 821A, an upper end surface of the ejector pin 826A forms a wall surface of the cavity space 801A, and abuts on the molding product 20. At least one ejector pin 826A is provided for each cavity space 801A. The ejector pin 826A is raised to eject the molding product 20 upward, and the molding product 20 is ejected. Thereafter, the ejector pin 826A is lowered.

The lower die 820A further includes a mold opening and closing pin 827A disposed to be freely raised and lowered in a pin hole penetrating the attachment plate 821A, the intermediate plate 823A, and the die plate 822A in the vertical direction. A stopper (not illustrated) is provided so that the mold opening and closing pin 827A does not fall downward of the attachment plate 821A. The mold opening and closing pin 827A is raised to press the upper die 810A upward from the lower die 820A, and the mold opening is performed. On the other hand, the mold opening and closing pin 827A is lowered to place the upper die 810A on the lower die 820A, and the mold closing is performed. Three or more mold opening and closing pins 827A (only two are illustrated in FIG. 4) are provided so that the upper die 810A can be stably supported.

The ejector unit 200 includes an ejector crosshead 210 that is raised and lowered below the lower platen 120, and a drive mechanism 220 that raises and lowers the ejector crosshead 210. The drive mechanism 220 includes an ejector motor 221 and a motion conversion mechanism 222 that converts a rotary motion of the ejector motor 221 into a linear motion of the ejector crosshead 210. The motion conversion mechanism 222 includes a screw shaft and a screw nut screwed to the screw shaft. A ball or a roller may be interposed between the screw shaft and the screw nut.

For example, a position or a movement speed of the ejector crosshead 210 is detected by using an ejector motor encoder. The ejector motor encoder detects the rotation of the ejector motor 221, and transmits a signal indicating a detection result thereof to the control device 700. An ejector crosshead position detector for detecting the position of the ejector crosshead 210, and an ejector crosshead movement speed detector for measuring the movement speed of the ejector crosshead 210 are not limited to the ejector motor encoder, and a general detector can be used.

The ejector unit 200 further includes an ejector rod 230 extending upward from the ejector crosshead 210. The ejector rod 230 is disposed to be freely raised and lowered in a fixing hole 123 penetrating the lower platen 120 in the vertical direction. The ejector rod 230 passes through a rotation hole 124 penetrating the rotary table 121 in the vertical direction and a through-hole 828A penetrating the attachment plate 821A in the vertical direction, and comes into contact with the ejector plate 825A to press the ejector pin 826A upward via the ejector plate 825A.

In addition, the ejector unit 200 further includes a mold opening and closing rod 240 extending upward from the ejector crosshead 210. The mold opening and closing rod 240 is disposed to be freely raised and lowered in a fixing hole 125 penetrating the lower platen 120 in the vertical direction. The mold opening and closing rod 240 passes through a rotation hole 126 penetrating the rotary table 121 in the vertical direction, and comes into contact with the mold opening and closing pin 827A to press the mold opening and closing pin 827A upward. The number of the mold opening and closing rods 240 may be the same as the number of the mold opening and closing pins 827A.

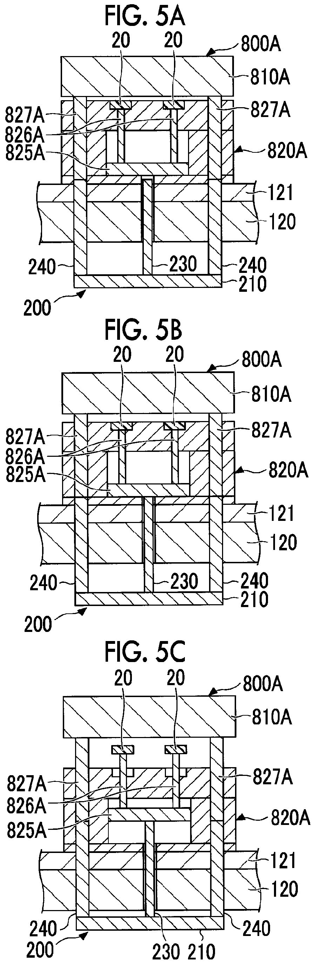

Next, an operation of the ejector unit 200 will be described with reference to FIGS. 4 and 5A to 5C. FIG. 4 illustrates an example of the ejector unit when the rotation of the rotary table is stopped. FIG. 5A is a sectional view illustrating an example of the ejector unit after the mold opening starts and before the ejection operation starts. FIG. 5B is a sectional view illustrating an example of the ejector unit when the ejection operation starts. FIG. 5C is a sectional view illustrating an example of the ejector unit when the mold opening is completed and the ejection operation is completed.

As illustrated in FIG. 4, when the rotation of the rotary table 121 is stopped, the positions of the fixing hole 123 of the lower platen 120 and the rotation hole 124 of the rotary table 121 are aligned with each other, and the positions of the fixing hole 125 of the lower platen 120 and the rotation hole 126 of the rotary table 121 are aligned with each other. In this case, the ejector rod 230 and the mold opening and closing rod 240 are stopped below the rotary table 121. In addition, the upper die 810A is placed on the lower die 820A.

Next, the control device 700 drives the ejector motor 221 to raise the ejector crosshead 210 from a raising start position to the mold opening start position. As a result, the mold opening and closing rod 240 abuts on the mold opening and closing pin 827A. Subsequently, the control device 700 drives the ejector motor 221 to further raise the ejector crosshead 210, and start the mold opening process. In the mold opening process, as illustrated in FIG. 5A, the mold opening and closing pin 827A is pressed upward by the mold opening and closing rod 240, and the upper die 810A is pressed upward from the lower die 820A.

Subsequently, the control device 700 drives the ejector motor 221 to further raise the ejector crosshead 210 to the ejection start position. As a result, as illustrated in FIG. 5B, the ejector rod 230 abuts on the ejector plate 825A. Subsequently, the control device 700 drives the ejector motor 221 to further raise the ejector crosshead 210, and start the ejection process. In the ejection process, the ejector pin 826A is pressed upward via the ejector plate 825A, and the molding product 20 is ejected upward from the lower die 820A.

Subsequently, the control device 700 drives the ejector motor 221 to raise the ejector crosshead 210 to a raising completion position, and stops the ejector crosshead 210. As a result, the mold opening process and the ejection process are completed, and as illustrated in FIG. 5C, the molding product 20 is ejected upward from the lower die 820A. Thereafter, the molding product 20 is unloaded out by an unloading machine.

Thereafter, the control device 700 drives the ejector motor 221 to lower the ejector crosshead 210 from a lowering start position to a lowering completion position, and stops the ejector crosshead 210. The ejector rod 230 and the mold opening and closing rod 240 stop below the rotary table 121, and the rotary table 121 is rotated again.

A raising speed and positions (including the raising start position, the raising speed switching position, the mold opening start position, the ejection start position, and the raising completion position) of the ejector crosshead 210 are collectively set as a series of setting conditions. The raising start position, the raising speed switching position, the mold opening start position, the ejection start position, and the raising completion position are aligned in this order from the lower side toward the upper side, and represent the start point and the end point of the section in which the raising speed is set. The raising speed is set for each section. The number of the raising speed switching positions may be one or more. The raising speed switching position may not be set.

A lowering speed and positions (including the lowering start position, the lowering speed switching position, and the lowering completion position) of the ejector crosshead 210 are collectively set as a series of setting conditions. The lowering start position, the lowering speed switching position, and the lowering completion position are aligned in this order from the upper side toward the lower side, and represent the start point and the end point of the section in which the lowering speed is set. The lowering speed is set for each section. The number of the lowering speed switching positions may be one or more. The lowering speed switching position may not be set. The lowering start position and the raising completion position may be the same position. In addition, the lowering completion position and the raising start position may be the same position.

### Injection Unit

The injection unit 300 is raised and lowered with respect to the upper platen 110 by the moving unit 400 illustrated in FIG. 1. The injection unit 300 touches the mold units 800A, 800B, and 800C, and fills the cavity space (for example, the cavity space 801A) inside the mold units 800A, 800B, and 800C with the molding material. As illustrated in FIGS. 2 and 3, for example, the injection unit 300 includes a cylinder 310 that heats the molding material, a nozzle 320 provided in a lower end portion of the cylinder 310, a screw 330 disposed to be freely raised and lowered and rotatable inside the cylinder 310, a plasticizing motor 340 that rotates the screw 330, an injection motor 350 that advances and retreats the screw 330, and a load detector 360 that measures a load transmitted between the injection motor 350 and the screw 330.

The cylinder 310 heats the molding material supplied into the cylinder 310 from a feed port 311. For example, the molding material includes a resin. For example, the molding material is formed in a pellet shape, and is supplied to the feed port 311 in a solid state. The feed port 311 is formed in an upper portion of the cylinder 310. A cooler 312 such as a water-cooling cylinder is provided on an outer periphery of the upper portion of the cylinder 310. Below the cooler 312, a heating unit 313 such as a band heater and a temperature measurer 314 are provided on an outer periphery of the cylinder 310.

The cylinder 310 is divided into a plurality of zones in the axial direction (for example, the Z-axial direction) of the cylinder 310. The heating unit 313 and the temperature measurer 314 are provided in each of the plurality of zones. The control device 700 controls the heating unit 313 so that a set temperature is set in each of the plurality of zones and a measurement temperature of the temperature measurer 314 reaches the set temperature.

The nozzle 320 is provided in a lower end portion of the cylinder 310, and is pressed against the mold units 800A, 800B, and 800C. The heating unit 313 and the temperature measurer 314 are provided on the outer periphery of the nozzle 320. The control device 700 controls the heating unit 313 so that a measurement temperature of the nozzle 320 reaches the set temperature.

The screw 330 is disposed to be rotatable and to be freely raised and lowered inside the cylinder 310. When the screw 330 is rotated, the molding material is fed downward along a helical groove of the screw 330. The molding material is gradually melted by heat from the cylinder 310 while being fed downward. As the liquid molding material is fed downward of the screw 330, is accumulated in a lower portion of the cylinder 310, and the screw 330 is raised. Thereafter, when the screw 330 is lowered, the liquid molding material accumulated below the screw 330 is injected from the nozzle 320, and fills the inside of the mold units 800A, 800B, and 800C.

As a backflow prevention valve for preventing a backflow of the molding material fed upward from the lower side of the screw 330 when the screw 330 is pressed downward, a backflow prevention ring 331 is attached to the lower portion of the screw 330 to be freely raised and lowered.

The backflow prevention ring 331 is pressed upward by the pressure of the molding material below the screw 330 when the screw 330 is lowered, and is relatively raised with respect to the screw 330 to a close position (refer to FIG. 3) for closing a flow path of the molding material. In this manner, un upward backflow of the molding material accumulated below the screw 330 is prevented.

On the other hand, the backflow prevention ring 331 is pressed downward by the pressure of the molding material fed downward along the helical groove of the screw 330 when the screw 330 is rotated, and is relatively lowered with respect to the screw 330 to an open position (refer to FIG. 2) for opening the flow path of the molding material. In this manner, the molding material is fed downward of the screw 330.

The backflow prevention ring 331 may be either a co-rotation type rotating together with the screw 330 or a non-co-rotation type that does not rotate together with the screw 330.

The injection unit 300 may include a drive source that raises and lowers the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 raises and lowers the screw 330. A motion conversion mechanism that converts a rotary motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that raises and lowers the screw 330 is not limited to the injection motor 350, and may be a hydraulic cylinder, for example.

The load detector 360 measures a load transmitted between the injection motor 350 and the screw 330. The detected load is converted into the pressure by the control device 700. The load detector 360 is provided in a load transmission channel between the injection motor 350 and the screw 330, and measures the load acting on the load detector 360.

The load detector 360 transmits a signal of the detected load to the control device 700. The load detected by the load detector 360 is converted into the pressure acting between the screw 330 and the molding material, and is used in controlling or monitoring the pressure received from the molding material by the screw 330, a back pressure against the screw 330, or the pressure acting on the molding material from the screw 330.

A pressure detector for measuring the pressure of the molding material is not limited to the load detector 360, and a general detector can be used. For example, a nozzle pressure sensor or a mold internal pressure sensor may be used. The nozzle pressure sensor is installed in the nozzle 320. The mold internal pressure sensor is installed inside the mold units 800A, 800B, and 800C.

The injection unit 300 performs a plasticizing process, a filling process, and a holding pressure process under the control of the control device 700. The filling process and the holding pressure process may be collectively referred to as an injection process.

In the plasticizing process, the plasticizing motor 340 is driven to rotate the screw 330 at a set rotation speed, and the molding material is fed downward along the helical groove of the screw 330. As a result, the molding material is gradually melted. As the liquid molding material is fed downward of the screw 330, is accumulated in a lower portion of the cylinder 310, and the screw 330 is raised. For example, a rotation speed of the screw 330 is measured by using a plasticizing motor encoder 341. The plasticizing motor encoder 341 detects the rotation of the plasticizing motor 340, and transmits a signal indicating a detection result thereof to the control device 700. A screw rotational speed detector for measuring the rotation speed of the screw 330 is not limited to the plasticizing motor encoder 341, and a general detector can be used.

In the plasticizing process, the injection motor 350 may be driven to apply a preset back pressure to the screw 330 in order to limit sudden raising of the screw 330. The back pressure applied to the screw 330 is measured by using the load detector 360, for example. The load detector 360 transmits a signal indicating a detection result thereof to the control device 700. When the screw 330 is raised to a plasticizing completion position and a predetermined amount of the molding material is accumulated below the screw 330, the plasticizing process is completed.

The position and the rotation speed of the screw 330 in the plasticizing process are collectively set as a series of setting conditions. For example, a plasticizing start position, a rotation speed switching position, and a plasticizing completion position are set. The positions are aligned in this order from the lower side toward the upper side, and represent the start point and the end point of the section in which the rotation speed is set. The rotation speed is set for each section. The number of the rotation speed switching positions may be one or more. The rotation speed switching position may not be set. In addition, the back pressure is set for each section.

In the filling process, the injection motor 350 is driven to lower the screw 330 at a set movement speed, and the cavity space (for example, the cavity space 801A) inside the mold units 800A, 800B, and 800C is filled with the liquid molding material accumulated below the screw 330. The position or the movement speed of the screw 330 is detected by using an injection motor encoder 351, for example. The injection motor encoder 351 detects the rotation of the injection motor 350, and transmits a signal indicating a detection result thereof to the control device 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, a filling start position (also referred to as an "injection start position"), the movement speed switching position, and the V/P switching position are set. The positions are aligned in this order from the upper side toward the lower side, and represent the start point and the end point of the section in which the movement speed is set. The movement speed is set for each section. The number of the movement speed switching positions may be one or more. The movement speed switching position may not be set.

An upper limit value of the pressure of the screw 330 is set for each section in which the movement speed of the screw 330 is set. The pressure of the screw 330 is measured by the load detector 360. When a measurement value of the load detector 360 is equal to or smaller than a setting pressure, the screw 330 is lowered at a set movement speed. On the other hand, when the measurement value of the load detector 360 exceeds the setting pressure, in order to protect the mold, the screw 330 is lowered at the movement speed slower than the set movement speed so that the measurement value of the load detector 360 is equal to or smaller than the setting pressure.

After the position of the screw 330 reaches the V/P switching position in the filling process, the screw 330 may be temporarily stopped at the V/P switching position, and thereafter, the V/P switching may be performed. Immediately before the V/P switching, instead of stopping the screw 330, the screw 330 may be lowered at a low speed, or may be raised at a low speed. In addition, a screw position detector for detecting the position of the screw 330 and a screw movement speed detector for measuring the movement speed of the screw 330 are not limited to the injection motor encoder 351, and a general detector can be used.

In the holding pressure process, the injection motor 350 is driven to press the screw 330 downward. A pressure (hereinafter, also referred to as a "holding pressure") of the molding material in the lower end portion of the screw 330 is held at a setting pressure, and the molding material remaining inside the cylinder 310 is pressed toward the mold units 800A, 800B, and 800C. The molding material which is insufficient due to cooling shrinkage inside the mold units 800A, 800B, and 800C can be replenished. The holding pressure is measured by using the load detector 360, for example. The load detector 360 transmits a signal indicating a detection result thereof to the control device 700. A set value of the holding pressure may be changed depending on an elapsed time from the start of the holding pressure process. The holding pressure and a holding time for holding the holding pressure in the holding pressure process may be respectively set, or may be collectively set as a series of setting conditions.

In the holding pressure process, the molding material in the cavity space (for example, the cavity space 801A) inside the mold units 800A, 800B, and 800C is gradually cooled, and when the holding pressure process is completed, an inlet of the cavity space is closed by the solidified molding material. This state is referred to as gate seal, and prevents the backflow of the molding material from the cavity space. After the holding pressure process, a cooling process starts. In the cooling process, the molding material inside the cavity space is solidified. In order to shorten a molding cycle time, the plasticizing process may be performed during the cooling process.

The injection unit 300 of the present embodiment is an in-line screw type, but may be a pre-plastic type. The injection unit of the pre-plastic type supplies the molding material melted inside a plasticizing cylinder to an injection cylinder, and the molding material is injected into the mold unit from the injection cylinder. Inside the plasticizing cylinder, the screw is disposed to be rotatable and not to be raised and lowered, or the screw is disposed to be rotatable and to be freely raised and lowered. On the other hand, a plunger is disposed to be freely raised and lowered inside the injection cylinder.

In addition, the injection unit 300 of the present embodiment is a vertical type in which the axial direction of the cylinder 310 is the vertical direction, but may be a horizontal type in which the axial direction of the cylinder 310 is the horizontal direction. The mold clamping unit combined with the injection unit 300 of the horizontal type may be the horizontal type or the vertical type. Similarly, the mold clamping unit combined with the injection unit 300 of the vertical type may be the vertical type or the horizontal type.

### Moving Unit

As illustrated in FIG. 1, the moving unit 400 raises and lowers the injection unit 300 with respect to the upper platen 110. The moving unit 400 presses the nozzle 320 against the mold units 800A, 800B, and 800C, thereby generating a nozzle touch pressure. For example, the moving unit 400 includes a plurality of hydraulic cylinders 401 and 402. The plurality of hydraulic cylinders 401 and 402 are disposed symmetrically around the nozzle 320.

In a state where the nozzle 320 is separated from the mold units 800A, 800B, and 800C by the moving unit 400, the mold clamping unit 100 rotates the mold units 800A, 800B, and 800C together with the rotary table 121. Thereafter, the moving unit 400 presses the nozzle 320 against the mold units 800A, 800B, and 800C, thereby generating the nozzle touch pressure.

In the present embodiment, the moving unit 400 includes the hydraulic cylinders 401 and 402, but the present invention is not limited thereto. For example, instead of the hydraulic cylinders 401 and 402, the moving unit 400 may include an injection unit moving motor fixed to the upper platen 110 or the injection unit 300, and a motion conversion mechanism that converts the rotary motion of the injection unit moving motor to the linear motion of the injection unit 300.

### Control Device

For example, the control device 700 is configured to include a computer, and has a central processing unit (CPU) 701, a storage medium 702 such as a memory, an input interface 703, and an output interface 704 as illustrated in FIGS. 2 and 3. The control device 700 performs various types of control by causing the CPU 701 to execute a program stored in the storage medium 702. For example, the control device 700 controls the rotary table 121. In addition, the control device 700 receives a signal from the outside through the input interface 703, and transmits the signal to the outside through the output interface 704.

The control device 700 causes each of the mold units 800A, 800B, and 800C to repeatedly perform a process performed at the first position P1, a table rotating process, a process performed at the second position P2, a table rotating process, and a process performed at the third position P3, and a table rotating process, thereby repeatedly manufacturing the molding product 20. A series of operations for obtaining the molding product 20, for example, an operation until the subsequent platen closing process starts after the platen closing process starts will be referred to as a "shot" or a "molding cycle". In addition, a time required for one shot will be referred to as a "molding cycle time" or a "cycle time".

For example, one molding cycle has the process performed at the first position P1, the table rotating process, the process performed at the second position P2, the table rotating process, the process performed at the third position P3, and the table rotating process in this order.

For example, at the first position P1, a platen closing process, a pressurizing process, a mold clamping process, a filling process, a holding pressure process, a depressurizing process, and a platen opening process are performed. The platen closing process, the pressurizing process, the mold clamping process, the filling process, the holding pressure process, the depressurizing process, and the platen opening process start in this order. Starting the mold clamping process may coincide with starting the filling process. The filling process and the holding pressure process are performed during the mold clamping process. Completing the depressurizing process coincides with starting the platen opening process.

For example, at the second position P2, the cooling process is performed. The cooling process is performed until the ejection process starts after the depressurizing process starts. Therefore, the cooling process is performed not only at the second position P2 but also at the first position P1 and the third position P3.

For example, at the third position P3, the mold opening process, the ejection process, and the mold closing process are performed. The mold opening process, the ejection process, and the mold closing process start in this order. Completing the mold opening process may coincide with completing the ejection process. After the ejection process is completed, the mold closing process starts.

While various processes are performed at the third position P3, the plasticizing process is performed at the first position P1 to prepare for the subsequent molding cycle.

The control device 700 is connected to an operation unit 750 that receives an input operation of a user, and a display unit 760 that displays a screen. For example, the operation unit 750 and the display unit 760 may be configured to include a touch panel 770, and may be integrated with each other. The touch panel 770 serving as the display unit 760 displays the screen under the control of the control device 700. For example, the screen of the touch panel 770 may display information such as settings of the injection molding machine 10 and a current state of the injection molding machine 10. In addition, for example, the screen of the touch panel 770 may display a button for receiving the input operation of the user or an operation unit such as an input column. The touch panel 770 serving as the operation unit 750 detects an input operation of the user on the screen, and outputs a signal corresponding to the input operation to the control device 700. In this manner, for example, while confirming information displayed on the screen, the user can perform settings (including an input of a set value) of the injection molding machine 10 by operating the operation unit provided on the screen. In addition, the user can operate the injection molding machine 10 corresponding to the operation unit by operating the operation unit provided on the screen. For example, the operation of the injection molding machine 10 may be the operation (including stopping) of the mold clamping unit 100, the ejector unit 200, the injection unit 300, and the moving unit 400. In addition, the operation of the injection molding machine 10 may be switching between the screens displayed on the touch panel 770 serving as the display unit 760.

A case has been described in which the operation unit 750 and the display unit 760 of the present embodiment are integrated with each other as the touch panel 770. However, both of these may be independently provided. In addition, a plurality of the operation units 750 may be provided.

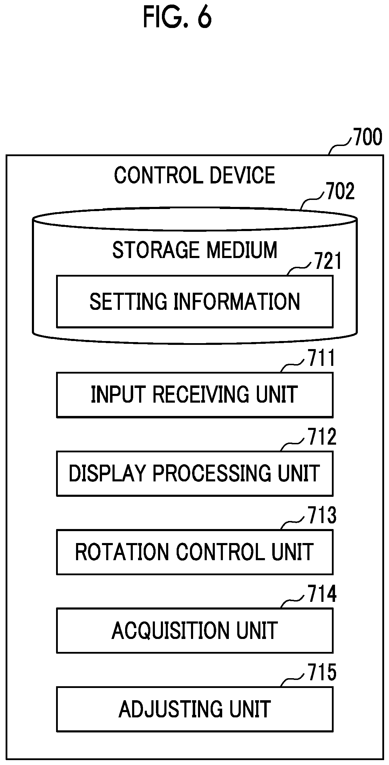

FIG. 6 is a functional block view illustrating components of the control device 700 according to the embodiment. Each functional block illustrated in FIG. 6 is conceptual, and may not necessarily be configured to be physical as illustrated. All or a portion of each functional block can be configured to be functionally or physically distributed and integrated in any desired unit. All or any desired portion of each processing function performed in each functional block may be realized by a program executed by the CPU 701, or may be realized as hardware using a wired logic. As illustrated in FIG. 6, the control device 700 includes an input receiving unit 711, a display processing unit 712, a rotation control unit 713, an acquisition unit 714, and an adjusting unit 715. The input receiving unit 711 receives an input operation of a user from the operation unit 750 via an input interface 703. The display processing unit 712 performs display control for displaying a display screen corresponding to the input operation in the operation unit 750 on the display unit 760. The rotation control unit 713 performs rotation control on the rotary table 121 so that the first mold unit 800A, the second mold unit 800B, and the third mold unit 800C are respectively disposed in order at the first position P1 for performing the mold clamping and the injection (also referred to as a mold clamping and injection stage), at the second position P2 for performing the cooling (also referred to as a cooling stage), and the third position P3 for unloading the molding product (also referred to as a unloading stage). The acquisition unit 714 acquires time information relating to the rotation control to set each cooling period of the first mold unit 800A, the second mold unit 800B, and the third mold unit 800C. Based on the acquired time information, the adjusting unit 715 performs adjustment to reduce a time difference between the respective cooling periods of the first mold unit 800A, the second mold unit 800B, and the third mold unit 800C. Specific description of each configuration will be described later.

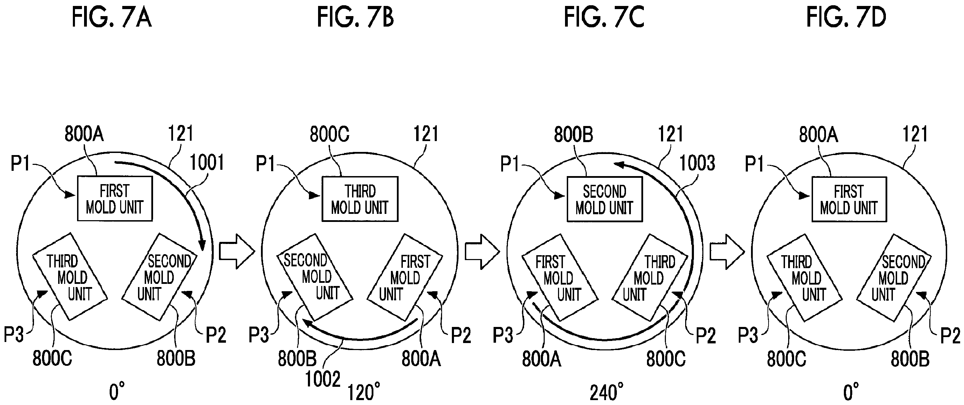

The rotation control unit 713 controls the rotation of the rotary table 121. FIGS. 7A to 7D are views illustrating transitions of the rotary table 121 on which rotation control is performed by the rotation control unit 713.

In the rotary table 121, the first mold unit 800A, the second mold unit 800B, and the third mold unit 800C are disposed at an interval of 120° on a circumference around the rotation hole 124. Then, the rotary table 121 rotates in a state where the first mold unit 800A, the second mold unit 800B, and the third mold unit 800C are placed on the rotary table 121. In the present embodiment, when any desired mold unit is indicated among the first mold unit 800A, the second mold unit 800B, and the third mold unit 800C, any desired mold unit indicates the mold unit 800. In addition, in the present embodiment, a configuration included in any desired mold unit 800 indicates the upper die 810 and the lower die 820.

The injection molding machine 10 of the present embodiment has a stop position for each processing of the mold units 800. In the present embodiment, the stop positions of the mold unit 800 are the first position P1, the second position P2, and the third position P3. The first position P1, the second position P2, and the third position P3 are disposed at an interval of 120° on the circumference with reference to the rotation hole 124 of the rotary table 121. Next, the stop position of the mold unit 800 will be described.

The first position P1 is a position for performing the platen closing process, the pressurizing process, the mold clamping process, the filling process, the holding pressure process, the depressurizing process, and the platen opening process on the mold unit 800, and is also referred to as the mold clamping and injection stage. The platen closing process is a process of performing control to narrow a space between the upper platen 110 and the lower platen 120 to perform the mold clamping of the mold unit 800. In addition, the platen opening process includes a process of performing control to widen the space between the upper platen 110 and the lower platen 120. That is, in the mold clamping and injection stage, the following control is performed. As the mold clamping, the control to narrow the space between the upper platen 110 and the lower platen 120 starts to be performed on the mold unit 800 (any one mold unit among the first mold unit 800A, second mold unit 800B, and third mold unit 800C) disposed at the first position P1 (mold clamping and injection stage) . After the pressurizing, filling, and holding pressure are performed, the control to widen the space between the upper platen 110 and the lower platen 120 is performed together with the depressurizing (example of a first process).

The second position P2 is a position for performing the cooling process on the mold unit 800, and is also referred to as the cooling stage. In the cooling stage, a process of causing the mold unit 800 (any one of the first mold unit 800A, the second mold unit 800B, and the third mold unit 800C) disposed at the second position P2 to stand by for a cooling setting time at the shortest is performed (example of the second process) . The cooling setting time is a predetermined period as a period for cooling the mold unit 800. The cooling setting time is included in the setting information 721.

An actual cooling period is not a stopping period at the second position P2, and is a period until the ejection control of the ejector unit 200 starts in the mold opening process in the unloading stage at the third position P3 after the raising control of the upper platen 110 starts in the platen opening process in the mold clamping and injection stage at the first position P1.

The third position P3 is a position for performing the mold opening process, the ejection process, and the mold closing process to unload the molding product, based on the control of the ejector unit 200, and is also referred to as the unloading stage. In the unloading stage, in order to unload the molding product from the mold unit 800 (any one mold unit of the first mold unit 800A, the second mold unit 800B, and the third mold unit 800C) disposed at the third position P3, the mold opening process of raising the upper die 810 of the mold unit 800 starts by starting the ejection control of the ejector unit 200 on the lower die 820 of the mold unit 800. Furthermore, the ejection process of ejecting the molding product 20 by performing the ejection control of the ejector unit 200 is performed, and the molding product is unloaded after the ejection process. Thereafter, the mold closing process of controlling the upper die 810 to be lowered under return control of the ejector unit 200 is completed (example of a third process).

An example illustrated in FIG. 7A represents a state where the rotary table 121 is not rotated (hereinafter, also referred to as a reference state) . The first mold unit 800A is disposed at the first position P1 (mold clamping and injection stage), the second mold unit 800B is disposed at the second position P2 (cooling stage), and the third mold unit 800C is disposed at the third position (unloading stage). After all of the processes for the mold units 800A to 800C are completed, the rotation control unit 713 controls the rotary table 121 to rotate 120° in a rightward direction. In the present embodiment, a rotation time when the rotary table 121 rotates 120° in the rightward direction (example of a predetermined direction) is 1.5 seconds.

An example illustrated in FIG. 7B represents a state where the rotary table 121 rotates 120° in the rightward direction from a position illustrated in FIG. 7A (hereinafter, also referred to as a rotation state of 120°) . The third mold unit 800C is disposed at the first position P1 (mold clamping and injection stage), the first mold unit 800A is disposed at the second position P2 (cooling stage), and the second mold unit 800B is disposed at the third position P3 (unloading stage). After all of the processes for the mold units 800A to 800C are completed, the rotation control unit 713 controls the rotary table 121 to further rotate 120° in the rightward direction. In the present embodiment, the rotation time when the rotary table 121 rotates is 1.5 seconds.

An example illustrated in FIG. 7C represents a state where the rotary table 121 rotates 240° in the rightward direction from a position illustrated in FIG. 7A (hereinafter, also referred to as a rotation state of 240°) . The second mold unit 800B is disposed at the first position P1 (mold clamping and injection stage), the third mold unit 800C is disposed at the second position P2 (cooling stage), and the first mold unit 800A is disposed at the third position P3 (unloading stage). After all of the processes for the mold units 800A to 800C are completed, the rotation control unit 713 controls the rotary table 121 to further rotate 240° in a leftward direction (example of a rotation direction opposite to the predetermined direction). In the present embodiment, the rotation time when the rotary table 121 rotates 240° in the leftward direction is 3 seconds.

An example illustrated in FIG. 7D represents a state where the rotary table 121 rotates 240° in the leftward direction from a position illustrated in FIG. 7C. In this manner, the disposition is the same as that illustrated in FIG. 7A. The disposition of the wiring and the pipe which are fixed to the rotary table 121 returns to an original disposition. Therefore, the wiring and the piping can be easily handled. In this way, in the present embodiment, the above-described rotation control is performed so that the wiring and the piping are easily handled. However, the rotation time varies depending on a rotation state of the rotary table 121.

The present embodiment is not limited to a method of controlling the rotation of 240° once in the leftward direction after controlling the rotation of 120° twice in the rightward direction. For example, a method of controlling the rotation of 240° once in the rightward direction (example of the rotation direction opposite to the predetermined direction) after controlling the rotation of 120° twice in the leftward direction (example of the predetermined direction) may be used. In addition, the present embodiment is not limited to the example in which a rotation angle is set to 120° and 240°, and any desired rotation angle may be set depending on a usage mode.

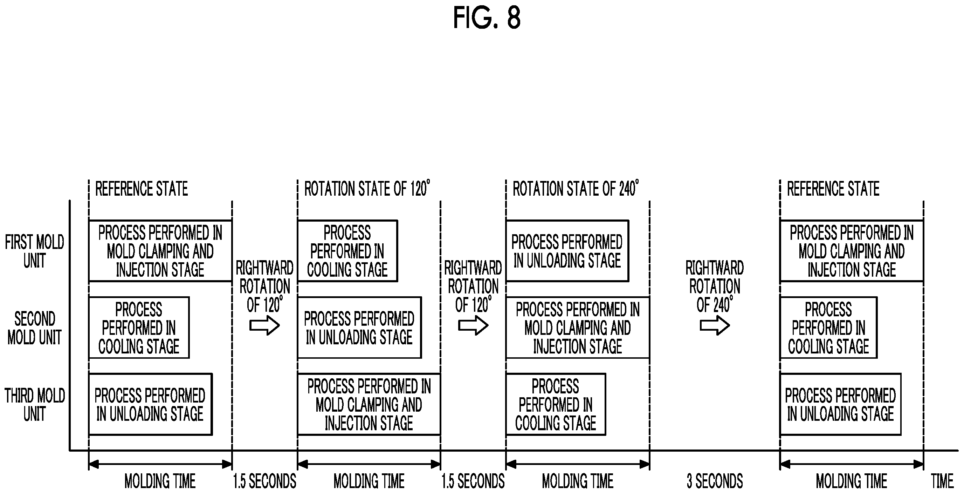

FIG. 8 is a view illustrating a time required for processing for each rotation state of the rotary table 121 when time adjustment is not performed. In an example illustrated in FIG. 8, when the rotary table 121 is present in the reference state (rotation state of 0°), the first mold unit 800A is located at the first position P1 (mold clamping and injection stage), the second mold unit 800B is located at the second position P2 (cooling stage), and the third mold unit 800C is located at the third position P3 (unloading stage).

As illustrated in FIG. 8, in the reference state (rotation state of 0°) of the rotary table 121, the process performed on the first mold unit 800A at the first position P1 (mold clamping and injection stage), the process performed on the second mold unit 800B at the second position P2 (cooling stage), and the process performed on the third mold unit 800C at the third position P3 (unloading stage) start at the same time. Thereafter, after a predetermined molding time elapses, the rotation control of the rotary table 121 starts.

The molding time is a longest time among a time required for the process performed in the mold clamping and injection stage, a time required for the process performed in the cooling stage, and a time required for the process performed in the unloading stage. An example illustrated in FIG. 8 represents a case where the process performed in the mold clamping and injection stage requires the longest time among the three stages. However, without being limited to this case, the example also includes a case where any one of the other two stages requires the longest time.

The rotary table 121 rotates 120° in the rightward direction from the reference state, and thereafter, is brought into the rotation state of 120°. In this case, the first mold unit 800A is located at the second position P2 (cooling stage), the second mold unit 800B is located at the third position P3 (unloading stage), and the third mold unit 800C is located at the first position P1 (mold clamping and injection stage). A rotation section until the rotary table 121 is brought into the rotation state of 120° after rotating 120° in the rightward direction from the reference state will be referred to as a first section.

In the rotation state of 120°, the process performed on the first mold unit 800A at the second position P2 (cooling stage), the process performed on the second mold unit 800B at the third position P3 (unloading stage), and the process performed on the third mold unit 800C at the first position P1 (mold clamping and injection stage) start at the same time. Thereafter, after the above-described molding time elapses, the rotation control of the rotary table 121 starts by the rotation control unit 713.

Then, the rotary table 121 rotates 120° in the rightward direction from the rotation state of 120°, and thereafter, is brought into the rotation state of 240°. The first mold unit 800A is located at the third position P3 (unloading stage), the second mold unit 800B is located at the first position P1 (mold clamping and injection stage), and the third mold unit 800C is located at the second position P2 (cooling stage) . A rotation section until the rotary table 121 is brought into the rotation state of 240° after rotating 120° in the rightward direction from the rotation state of 120° will be referred to as a second section.

In the rotation state of 240°, the process performed on the first mold unit 800A at the third position P3 (unloading stage), the process performed on the second mold unit 800B at the first position P1 (mold clamping and injection stage), and the process performed on the third mold unit 800C at the second position P2 (cooling stage) start at the same time. Thereafter, after the above-described molding time elapses, the rotation control of the rotary table 121 starts by the rotation control unit 713.

Thereafter, the rotary table 121 rotates 240° in the leftward direction from the rotation state of 240°, and thereafter, returns to the reference state. The first mold unit 800A is located at the first position P1 (mold clamping and injection stage), the second mold unit 800B is located at the second position P2 (cooling stage), and the third mold unit 800C is located at the third position P3 (unloading stage). A rotation section until the rotary table 121 is brought into the reference state (rotation state of 0°) after rotating 240° in the leftward direction from the rotation state of 240° will be referred to as a third section.

In an example illustrated in FIG. 8, the rotation times are 1.5 seconds, 1.5 seconds, and 3 seconds in order from the first section to the third section. As described above, the cooling period of the mold unit 800 is a period until the ejection control of the ejector unit 200 starts in the mold opening process at the third position P3 (unloading stage) after raising control of the upper platen 110 starts in the platen opening process at the first position P1 (mold clamping and injection stage). Therefore, due to a difference in the rotation times, there is a difference in the cooling periods among the first mold unit 800A, the second mold unit 800B, and the third mold unit 800C. When there is the difference in the cooling periods, there is a possibility that the difference may affect variations in quality of the molding product. Therefore, in the present embodiment, control is performed to reduce the difference in the cooling periods.

The storage medium 702 of the control device 700 includes the setting information 721. The setting information 721 includes information that can be set to reduce the difference in the cooling periods with regard to the rotation control of the rotary table 121. For example, the setting information 721 includes a standby time until the rotary table 121 starts to rotate after the molding time of the mold unit 800 elapses (after the processes are performed in all stages) with regard to each of the reference state (rotation state of 0°), the rotation state of 120°, and the rotation state of 240°of the rotary table 121. In addition, the setting information 721 includes a rotation speed of the rotary table 121 from 0° to 120° (first section), a rotation speed from 120° to 240° (second section), and a rotation speed from 240° to 0° (third section). Furthermore, the setting information 721 includes a cooling setting time indicating a stopping time in the cooling stage.

The acquisition unit 714 acquires information on the rotation time of the rotary table 121, as time information required for setting the cooling periods among the first mold unit 800A, the second mold unit 800B, and the third mold unit 800C. For example, the acquisition unit 714 of the present embodiment acquires a rotation time "1.5 seconds" during which the rotary table 121 rotates 120° in the rightward direction from the reference state (rotation state of 0°), a rotation time "1.5 seconds" during which the rotary table 121 rotates 120° in the rightward direction from the rotation state of 120°, and a rotation time "3 seconds" during which the rotary table 121 rotates 240° in the leftward direction from the rotation state of 240°.

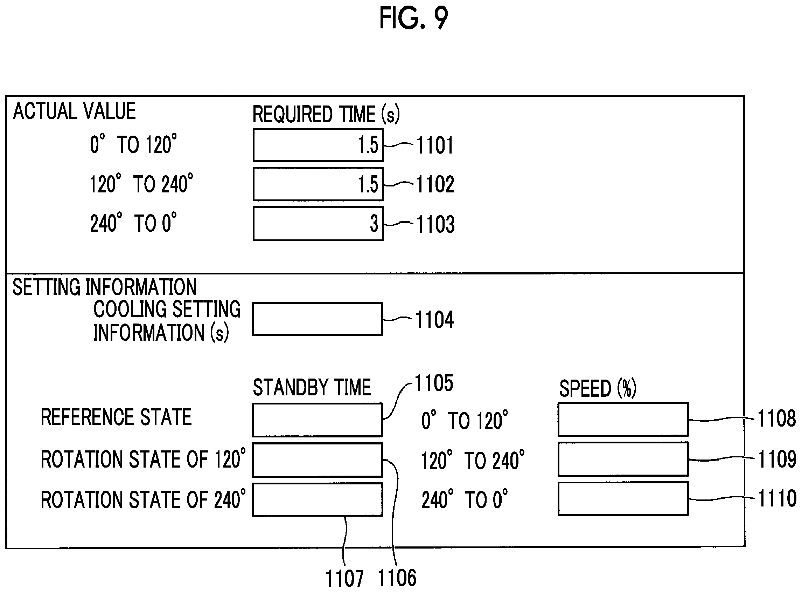

The display processing unit 712 displays a setting screen for setting the setting information 721. FIG. 9 is a view illustrating the setting screen relating to rotation control of the rotary table 121, which is displayed by the display processing unit 712 according to the present embodiment. The setting screen is used to perform setting to reduce the difference in the cooling periods between the mold units 800.

As illustrated in FIG. 9, the display processing unit 712 displays an actual value column 1101 of 0° to 120° (first section), an actual value column 1102 of 120° to 240° (second section), and an actual value column 1103 of 240° to 0° (third section) . The rotation time "1.5 seconds" of the first section is displayed in the actual value column 1101 of 0° to 120°. The rotation time "1.5 seconds" of the second section is displayed in the actual value column 1102 of 120° to 240°. The rotation time "3 seconds" of the third section is displayed in the actual value column 1103 of 240° to 0°. A user can recognize that a deviation occurs in the cooling periods by visually recognizing that the rotation time varies in each section.

The display processing unit 712 displays a cooling setting time column 1104, a standby time column 1105 in the reference state, a standby time column 1106 in the rotation state of 120°, a standby time column 1107 in the rotation state of 240°, a speed column 1108 of 0° to 120° (first section), a speed column 1109 of 120° to 240° (second section), and a speed column 1110 of 240° to 0° (third section) . The cooling setting time column 1104 is a column for setting the standby time in the cooling stage.

The standby time column 1105 in the reference state (rotation state of 0°) is a column for setting the standby time after the molding time elapses in the reference state (all of the processes in each stage are completed). The standby time column 1106 in the rotation state of 120° is a column for setting the standby time after the molding time elapses in the rotation state of 120°. The standby time column 1107 in the rotation state of 240° is a column for setting the standby time after the molding time elapses in the rotation state of 240°.

The speed column 1108 of 0° to 120° is a column for setting the rotation speed when the rotary table 121 is controlled to rotate in the rightward direction in the first section. The speed column 1109 of 120° to 240° is a column for setting the rotation speed when the rotary table 121 is controlled to rotate in the rightward direction in the second section. The speed column 1110 of 240° to 0° is a column for setting the rotation speed when the rotary table 121 is controlled to rotate in the leftward direction in the third section.

The input receiving unit 711 of the present embodiment receives values input to the standby time columns 1105 to 1107 and the speed columns 1108 to 1110. In other words, the input receiving unit 711 receives a user's input of the value for narrowing the difference in the cooling periods, based on the values displayed in the actual value columns 1101 to 1103. In addition, the input receiving unit 711 receives the value input to the cooling setting time column 1104.

For example, the input receiving unit 711 receives the inputs such as "1.5" seconds in the standby time column 1105 in the reference state, "1.5" seconds in the standby time column 1106 in the rotation state of 120°, and "0" seconds in the standby time column 1107 in the rotation state of 240°.

The adjusting unit 715 adjusts the rotation control of the rotary table 121 which is performed by the rotation control unit 713. For example, the adjusting unit 715 adjusts the rotation control of the rotary table 121 which is performed by the rotation control unit 713 to narrow a time difference among a time (example of a first time) until the first mold unit 800A moves in the first section and a second process with respect to the first mold unit 800A starts at the second position P2 (cooling stage) (starts standby for the cooling setting time) after the molding time elapses from when a first process with respect to the first mold unit 800A starts (for example, the lowering control of the upper platen 110 starts in the platen closing process) at the first position P1 (mold clamping and injection stage), a time (example of a second time) until the first mold unit 800A moves in the second section and a third process with respect to the first mold unit 800A starts (for example, the ejection control of the ejector unit 200 starts in the mold opening process) at the third position P3 (unloading stage) after the molding time elapses from when the second process with respect to the first mold unit 800A starts at the second position P2 (cooling stage), and a time (example of a third time) until the first mold unit 800Amoves in the third section and the first process with respect to the first mold unit 800A starts at the first position P1 (mold clamping and injection stage) after the molding time elapses from when the third process with respect to the first mold unit 800A starts at the third position P3 (unloading stage) . In the present embodiment, as the rotation control of the rotary table 121 to narrow the time difference, for example, the standby time after the molding time elapses is adjusted, and the rotation speed of the rotary table 121 is adjusted.

For example, the adjusting unit 715 adjusts the rotation control of the rotary table 121 by setting the standby time "1.5" seconds in the reference state (rotation state of 0°), the standby time "1.5" seconds in the rotation state of 120°, and the standby time "0" seconds in the rotation state of 240° in the setting information 721, based on a parameter input received by the input receiving unit 711. In addition, the adjusting unit 715 may set a cooling setting period in the setting information 721, based on the parameters input to a cooling setting period column which are received by the input receiving unit 711.

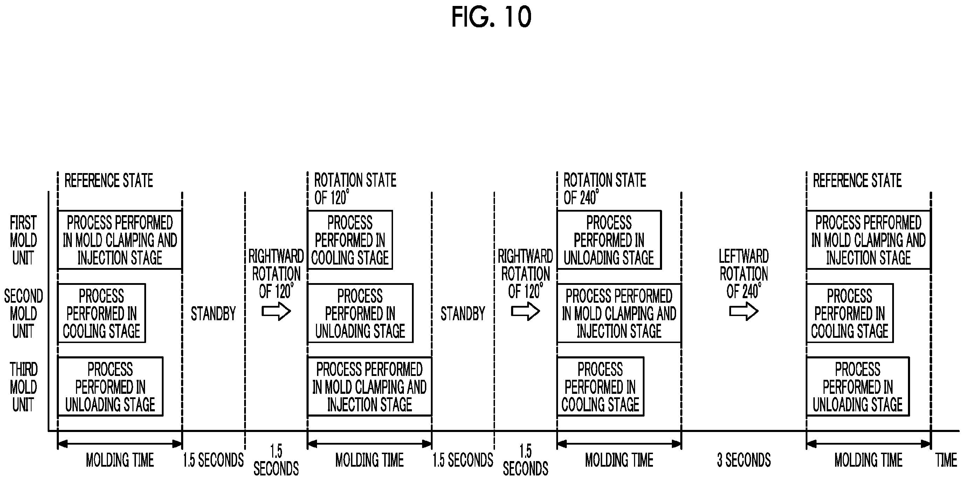

FIG. 10 is a view illustrating a time required for the process in each rotation state of the rotary table 121 when adjustment relating to the rotation control is performed in the control device according to the present embodiment.

As illustrated in FIG. 10, when the rotary table 121 is in the reference state, after the molding time elapses (processes in all stages are completed), the rotation control unit 713 stands by for "1.5" seconds before the rotation control starts in the first section. Thereafter, the rotation control unit 713 performs the rotation control for "1.5" seconds in the first section.

When the rotary table 121 is in the rotation state of 120°, after the molding time elapses (processes in all stages are completed), the rotation control unit 713 stands by for "1.5" seconds before the rotation control starts in the second section. Thereafter, the rotation control unit 713 performs the rotation control for "1.5" seconds in the second section.

In addition, when the rotary table 121 is in the rotation state of 240°, after the molding time elapses (processes in all stages are completed), the rotation control unit 713 does not stand by before the rotation control starts in the third section (after standby for "0" seconds), and performs the rotation control for "3" seconds in the third section.

In this manner, in the present embodiment, the standby time is adjusted to equalize required times until the subsequent process starts after any desired process is completed. In this manner, all of the cooling periods of the mold units 800A, 800B, and 800C can coincide with each other. A case where the cooling periods coincide with each other has been described in the present embodiment. However, the present invention is not limited to the method of controlling the cooling periods to coincide with each other, and the time difference in the cooling periods may be reduced. Since the time difference in the cooling periods is reduced, it is possible to suppress variations in quality of the molding product.

In the present embodiment, the rotation speed may be adjusted instead of adjusting the standby time. For example, the adjusting unit 715 may adjust the rotation speed in the first section to "50%", the rotation speed in the second section to "50%", and the rotation speed in the third section to "1000" in accordance with the settings received by the input receiving unit 711. Even when the adjustment method is used in this way, the rotation times are equalized. Therefore, the difference in cooling periods can be reduced.

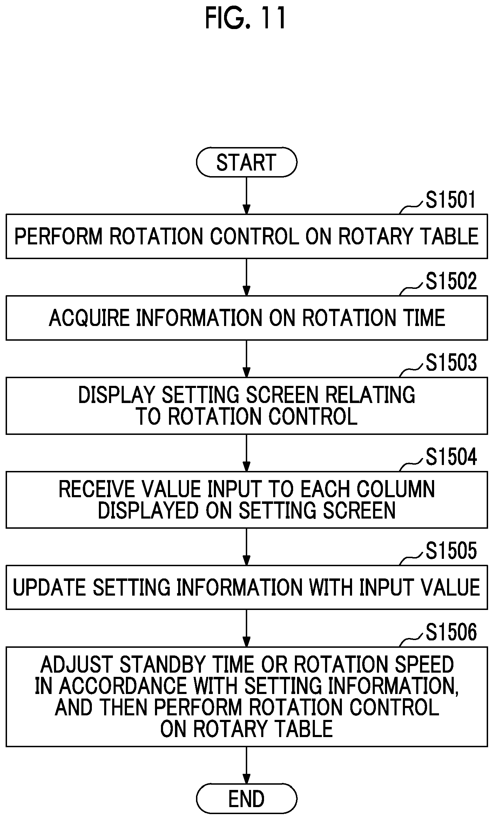

Next, a procedure of all processes performed by the injection molding machine 10 according to the present embodiment will be described. FIG. 11 is a flowchart illustrating the procedure of all processes performed by the injection molding machine 10 according to the present embodiment.

The rotation control unit 713 performs the rotation control of the rotary table 121 to move each of the first section, the second section, and the third section (S1501).

As time information for setting the cooling period, the acquisition unit 714 acquires information on the rotation time of the rotary table 121 to move each of the first section, the second section, and the third section in S1501 (S1502).

The display processing unit 712 displays the setting screen relating to the rotation control of the rotary table 121 (S1503). On the setting screen, the time information acquired in S1502 is displayed as an actual value (for example, refer to FIG. 9).

The input receiving unit 711 receives the value input to each column displayed on the setting screen to narrow the difference in the cooling periods between the mold units 800 (S1504).

The adjusting unit 715 updates the setting information 721 with the value input in S1504 (S1505). The rotation control of the rotary table 121 is adjusted by the update.

The rotation control unit 713 adjusts the standby time or the rotation speed in accordance with the setting information 721, and thereafter, performs the rotation control of the rotary table 121 so that the mold units 800 are respectively disposed in order at the first position P1 (mold clamping and injection stage), the second position P2 (cooling stage), and the third position P3 (unloading stage) (S1506).

In the present embodiment, an example has been described in which the stop positions of the mold unit 800 are the first position P1 (mold clamping and injection stage), the second position P2 (cooling stage), and the third position P3 (unloading stage). However, the stop positions of the mold unit 800 are not limited to the stages. For example, the third position P3 may be used as a unloading and insert stage instead of the unloading stage.

In the unloading and insert stage, based on the control of the ejector unit 200, the mold opening process, the ejection process, an insertion process of inserting a member (for example, a pressed product) integrated with the molding material into the mold unit 800, and the mold closing process are performed to unload the molding product. In the specific unloading and insert stage, the mold opening process of raising the upper die 810 of the mold unit 800 by starting the ejection control of the ejector unit 200 via the lower die 820 of the mold unit 800 is performed. Furthermore, the ejection process of ejecting the molding product 20 by performing the ejection control of the ejector unit 200 is performed. After the molding product is unloaded, the insertion process of inserting the member integrated with the molding material is performed. Thereafter, in the unloading and insert stage, the return control of the ejector unit 200 is completed by performing the mold closing process of controlling the upper die 810 to be lowered.

In the present embodiment, a case has been described where the rotation control is performed or the standby time is set after the molding time elapses from when the process in each stage starts. In the present embodiment, a case has been described where the predetermined time until the rotation control is performed after the process starts at each position is the molding time. However, for example, the predetermined time may be a time longer than the molding time.

The injection molding machine 10 according to the present embodiment includes above-described configuration. Accordingly, it is possible to reduce the time difference between the processes when the plurality of mold units manufacture the molding products. For example, since the time difference is reduced, the time difference in the cooling periods of each mold unit 800 is reduced. Therefore, variations in quality of the molding product can be suppressed.

### Modification Example

Hitherto, the embodiments of the injection molding machine have been described. However, the present invention is not limited to the above-described embodiments. Various modifications, corrections, substitutions, additions, deletions, and combinations can be made within the scope of the present invention described in claims. As a matter of course, all of these also belong to the technical scope of the present invention.

### Modification Example 1

In the above-described embodiment, an example of adjusting the rotation control in accordance with the value input by the user has been described. However, adjusting the rotation control is not limited to the value input by the user, and may be automatically performed by the injection molding machine 10. Therefore, as Modification Example 1, an example will be described in which the control device 700 automatically adjusts the rotation control to narrow the time difference in the cooling periods. The control device 700 of the present modification example includes the configuration the same as that of the embodiment, and thus, description thereof will be omitted.

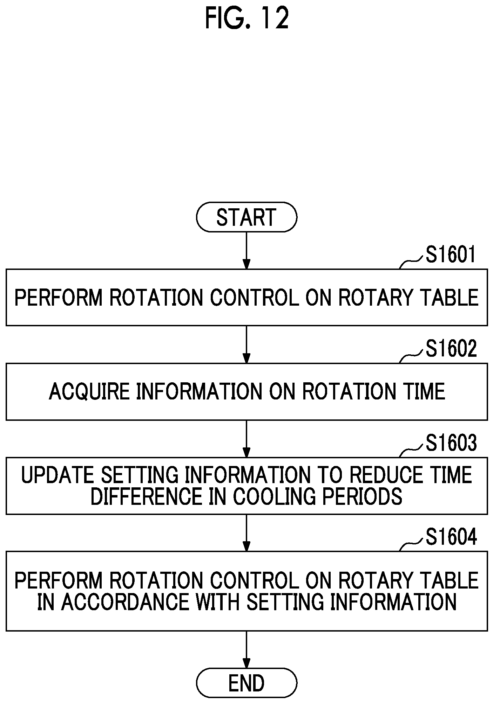

Next, a procedure of all processes performed by the injection molding machine 10 according to Modification Example 1 will be described. FIG. 12 is a flowchart illustrating the procedure of all processes performed by the injection molding machine 10 according to Modification Example 1.

The rotation control unit 713 performs the rotation control of the rotary table 121 to move each of the first section, the second section, and the third section (S1601).

As time information for specifying the cooling period, the acquisition unit 714 acquires information on the rotation time of the rotary table 121 to move each of the first section, the second section, and the third section in S1601 (S1602).

Based on the information on the rotation time acquired by the acquisition unit 714, the adjusting unit 715 adjusts the rotation control of the rotary table 121 by updating the setting information 721 to reduce the time difference in the cooling periods (S1603). For example, when the acquisition unit 714 acquires the rotation time "1.5 seconds" in the first section, the rotation time "1.5 seconds" in the second section, and the rotation time "3 seconds" in the third section, the adjusting unit 715 sets the standby time "1.5" seconds in the first section and the second section, and sets the standby time "0" seconds in the third section. In this manner, the adjusting unit 715 can equalize the sum of the rotation times and the standby times.

The rotation control unit 713 adjusts the standby time or the rotation speed in accordance with the setting information 721, and thereafter, performs the rotation control of the rotary table 121 so that the mold units 800 are respectively disposed in order at the first position P1 (mold clamping and injection stage), the second position P2 (cooling stage), and the third position P3 (unloading stage) (S1604).

In the present modification example, the time difference in the cooling periods of each mold unit 800 is reduced. Therefore, variations in quality of the molding product can be suppressed. In addition, since the rotation control is automatically adjusted, a burden on the user can be reduced.

In addition, the present modification example is not limited to the method of setting the standby time, based on the rotation time measured in advance. For example, the acquisition unit 714 may acquire an actual value of the rotation time during actual molding in the injection molding machine 10, and the rotation control unit 713 may perform the control for automatically adjusting (updating) the standby time to reduce the time difference, based on the actual value of the rotation time.

### Modification Example 2

In the above-described embodiment and modification example, a case has been described where the standby time after the molding time elapses and the rotation speed of the rotary table 121 are adjusted to reduce the time difference in the cooling periods. However, the method for reducing the time difference in the cooling periods is not limited to adjusting the standby time after the molding time elapses and the rotation speed of the rotary table 121. Therefore, in the present modification example, a case will be described where the standby time is set before the process in each stage is performed after the rotation control.

In the present modification example, with regard to each of the reference state (rotation state of 0°), the rotation state of 120°, and the rotation state of 240°, the adjusting unit 715 sets the standby time before the process in each stage is performed after the rotation control, in the setting information 721.

When the standby time after the rotation control is set in the setting information 721 after the rotation control of the rotation control unit 713, the control device 700 performs the control for starting the process in each stage after the standby for the standby time. For example, when "1.5 seconds" are required for the rotation control in the first section, "1.5 seconds" are required for the rotation control in the second section, and "3 seconds" are required for the rotation control in the third section, the adjusting unit 715 sets the standby time of "1.5" seconds before the process in each stage starts in the rotation state of120°, and the standby time of "1.5" seconds before the process in each stage starts in the rotation state of 240°, and the standby time of "0" seconds before the process in each stage starts in the reference state, in the setting information 721. In this manner, the time difference in the cooling periods can be reduced. Therefore, an advantageous effect the same as that of the above-described embodiment can be obtained.

### Modification Example 3

In the above-described embodiment and modification example, an example has been described in which three mold units 800 are provided in the rotary table 121. However, the above-described embodiment and modification example do not limit the number of the mold units 800 provided in the rotary table 121, and the number may be four or more. Therefore, in Modification Example 3, a case will be described where four mold units 800 are provided in the rotary table 121.

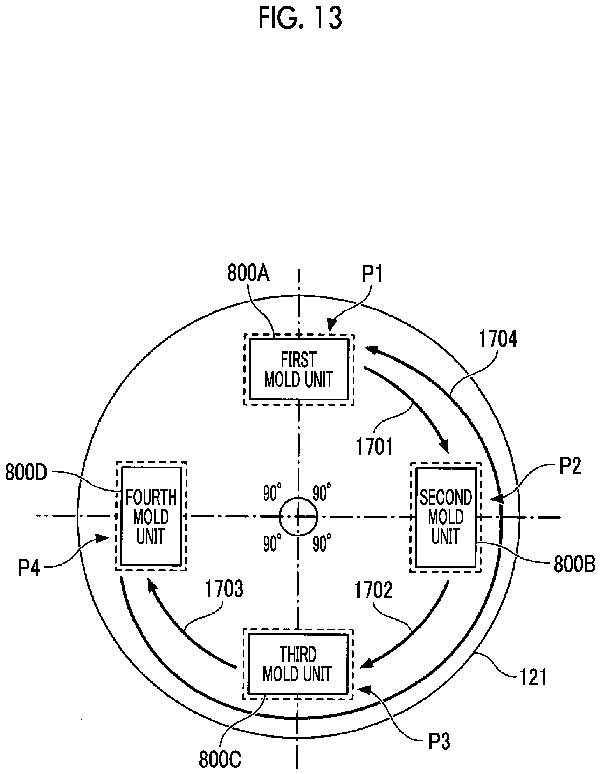

FIG. 13 is a view illustrating a disposition of the mold units 800 in the rotary table 121 according to the present modification example. As illustrated in FIG. 13, the first mold unit 800A, the second mold unit 800B, the third mold unit 800C, and a fourth mold unit 800D are disposed at every interval of 90° in the rotary table 121.

In the present modification example, the first position P1 (mold clamping and injection stage), the second position P2 (first cooling stage), the third position P3 (second cooling stage), and a fourth position P4 (unloading stage) are present as the positions where the mold units 800 can be disposed. The first position P1 (mold clamping and injection stage) and the fourth position P4 (unloading stage) are the same as those in the above-described embodiment.

The second position P2 (first cooling stage) and the third position P3 (second cooling stage) are positions for cooling the mold unit 800. The cooling period is a period until the ejection control of the ejector unit 200 starts in the mold opening process at the fourth position P4 (unloading stage) after the raising control of the upper platen 110 starts in the platen opening process at the first position P1 (mold clamping and injection stage). In the present modification example, since two cooling stages are provided, it is possible to cope with even a molding product that requires a long cooling period.

As illustrated in FIG. 13, the rotation control unit 713 performs the rotation control in the first section 1701 in the rightward direction from the reference state (rotation state of 0°) to the rotation state of 90°, the rotation control in the second section 1702 in the rightward direction from the rotation state of 90° to the rotation state of 180°, the rotation control in the third section 1703 in the rightward direction from the rotation state of 180° to the rotation state of 270°, and the rotation control in the fourth section 1704 in the leftward direction from the rotation state of 270° to the reference state (rotation state of 0°).

Each rotation time of the rotation control in the first section 1701, the rotation control in the second section 1702, and the rotation control in the third section 1703 is set to "1 second", for example. The rotation time for the rotation control in the fourth section 1704 is "3 seconds", for example.

In this case, the adjusting unit 715 updates the setting information 721 to provide the standby time of "2 seconds" after the molding time in the reference state (rotation state of 0°), the rotation state of 90°, and the rotation state of 180°.

In this manner, a total time of the rotation time and the standby time becomes "3 seconds" in each of the rotation states of the rotary table 121. In other words, since the time difference in the cooling periods can be reduced, variations in quality of the molding product can be suppressed.

### (Modification Example 4)

In Modification Example 3, an example has been described in which the first position P1 (mold clamping and injection stage), the second position P2 (first cooling stage), the third position P3 (second cooling stage), and the fourth position (unloading stage) are present as the positions where the four mold units 800 can be disposed. However, Modification Example 3 does not limit a stage aspect when four mold units 800 are provided. Therefore, in Modification Example 4, another stage aspect will be described.

In the present modification example, the first position P1 (insert stage), the second position P2 (mold clamping and injection stage), the third position P3 (cooling stage), and the fourth position. (unloading stage) are present as the positions where the mold unit 800 can be disposed. The mold clamping and injection stage, the cooling stage, and the unloading stage are the same as those in the above-described embodiment.

In the insert stage at the first position P1, a member (for example, a pressed product) integrated with the molding material is inserted into the mold unit 800. As the specific processes performed in the insert stage, the mold opening process of raising the upper die 810 of the mold unit 800 starts by starting the ejection control of the ejector unit 200 via the lower die 820 of the mold unit 800. After the upper die 810 of the mold unit 800 is raised, an insertion process of inserting the member integrated with the molding material is performed. The mold closing process of lowering the upper die 810 under the return control of the ejector unit 200 is completed.

In the present modification example, the rotation time is the same as that in Modification Example 3. Therefore, the adjusting unit 715 updates the setting information 721 to provide the standby time of "2 seconds" after the molding time in the reference state (rotation state of 0°), the rotation state of 90°, and the rotation state of 180°. In this manner, the total time of the rotation time and the standby time becomes "3 seconds" . In other words, since the time difference in the cooling periods can be reduced, variations in quality of the molding product can be suppressed.

The above-described embodiment and modification example include the above-described configuration. In this manner, the time difference between the processes in each mold unit can be reduced, based on the positions disposed in the rotary table. Therefore, variations in quality of the molding product can be suppressed.

### Brief Description of the Reference Symbols

- 10:: injection molding machine
- 700:: control device
- 702:: storage medium
- 711:: input receiving unit
- 712:: display processing unit
- 713:: rotation control unit
- 714:: acquisition unit
- 715:: adjusting unit

## Claims

1. An injection molding machine (10) comprising:
a rotary table (121) that rotates while a first mold unit (800A), a second mold unit (800B), and a third mold unit (800C) are placed thereon;
an upper platen (110) provided above the rotary table (121) ;
a lower platen (120) provided below the rotary table (121) ; and
a control device (700) that controls the rotary table (121),
**characterized in that**
the control device (700) includes a rotation control unit (713) that controls the rotary table (121) to rotate in a predetermined direction to move the first mold unit (800A) in a first section (1701) from a first position (P1) to a second position (P2), rotate
in the predetermined direction to move the first mold unit (800A) in a second section (1702) from the second position (P2) to a third position (P3), and rotate in a direction opposite to the predetermined direction to move the first mold unit (800A) in a third section (1703) from the third position (P3) to the first position (P1), when rotation control is performed on the rotary table (121) so that the first mold unit (800A), the second mold unit (800B), and the third mold unit (800C) are respectively disposed in order at the first position (P1), the second position (P2), and the third position (P3), and
an adjusting unit (715) that performs adjustment to reduce a time difference among a first time until the first mold unit (800A) moves in the first section (1701) and a second process with respect to the first mold unit (800A) starts at the second position (P2) after a predetermined time elapses from when a first process with respect to the first mold unit (800A) starts at the first position (P1), a second time until the first mold unit (800A) moves in the second section (1702) and a third process with respect to the first mold unit (800A) starts at the third position (P3) after the predetermined time elapses from when the second process with respect to the first mold unit (800A) starts at the second position (P2), and a third time until the first mold unit (800A) moves in the third section (1703) and the first process with respect to the first mold unit (800A) starts at the first position (P1) after the predetermined time elapses from when the third process with respect to the first mold unit (800A) starts at the third position (P3), and
as the adjustment to reduce the time difference, the adjusting unit (715) adjusts a time until rotation control of the rotary table (121) starts after the predetermined time, when the first mold unit (800A) is disposed at any one of the first position (P1), the second position (P2), and the third position (P3) .

2. The injection molding machine (10) according to claim 1,
wherein the predetermined time is a longest time among
a time required for the first process indicating a process performed on any one mold unit of the first mold unit (800A), the second mold unit (800B), and the third mold unit (800C) which are disposed at the first position (P1), until control for widening a distance between the upper platen (110) and the lower platen (120) is completed after control for narrowing the distance between the upper platen (110) and the lower platen (120) starts,
a time required for the second process indicating a process performed on any one mold unit of the first mold unit (800A), the second mold unit (800B), and the third mold unit (800C) which are disposed at the second position (P2), and causing any one mold unit to stand by for a predetermined period, and
a time required for the third process indicating a process performed on any one mold unit of the first mold unit (800A), the second mold unit (800B), and the third mold unit (800C) which are disposed at the third position (P3), until return control of an ejector unit (200) is completed after ejection control of the ejector unit (200) starts.

3. An injection molding machine (10) comprising:
a rotary table (121) that rotates while a first mold unit (800A), a second mold unit (800B), and a third mold unit (800C) are placed thereon;
an upper platen (110) provided above the rotary table (121) ;
a lower platen (120) provided below the rotary table (121) ; and
a control device (700) that controls the rotary table (121),
**characterized in that**
the control device (700) includes a rotation control unit (713) that controls the rotary table (121) to rotate in a predetermined direction to move the first mold unit (800A) in a first section (1701) from a first position (P1) to a second position (P2), rotate
in the predetermined direction to move the first mold unit (800A) in a second section (1702) from the second position (P2) to a third position (P3), and rotate
in a direction opposite to the predetermined direction to move the first mold unit (800A) in a third section (1703) from the third position (P3) to the first position (P1), when rotation control is performed on the rotary table (121) so that the first mold unit (800A), the second mold unit (800B), and the third mold unit (800C) are respectively disposed in order at the first position (P1), the second position (P2), and the third position (P3), and
an adjusting unit (715) that performs adjustment to reduce a time difference among a first time until the first mold unit (800A) moves in the first section (1701) and a second process with respect to the first mold unit (800A) starts at the second position (P2) after a predetermined time elapses from when a first process with respect to the first mold unit (800A) starts at the first position (P1), a second time until the first mold unit (800A) moves in the second section (1702) and a third process with respect to the first mold unit (800A) starts at the third position (P3) after the predetermined time elapses from when the second process with respect to the first mold unit (800A) starts at the second position (P2), and a third time until the first mold unit (800A) moves in the third section (1703) and the first process with respect to the first mold unit (800A) starts at the first position (P1) after the predetermined time elapses from when the third process with respect to the first mold unit (800A) starts at the third position (P3), and
as the adjustment to reduce the time difference, the adjusting unit (715) adjusts a rotation speed of the rotary table (121) in one or more of the first section (1701), the second section (1702), and the third section (1703) in which the first mold unit (800A) moves.

4. An injection molding machine (10) comprising:
a rotary table (121) that rotates while a first mold unit (800A), a second mold unit (800B), and a third mold unit (800C) are placed thereon;
an upper platen (110) provided above the rotary table (121) ;
a lower platen (120) provided below the rotary table (121) ; and
a control device (700) that controls the rotary table (121),
**characterized in that**
the control device (700) includes
a rotation control unit (713) that controls the rotary table (121) to rotate in a predetermined direction to move the first mold unit (800A) in a first section (1701) from a first position (P1) to a second position (P2), rotate
in the predetermined direction to move the first mold unit (800A) in a second section (1702) from the second position (P2) to a third position (P3), and rotate
in a direction opposite to the predetermined direction to move the first mold unit (800A) in a third section (1703) from the third position (P3) to the first position (P1), when rotation control is performed on the rotary table (121) so that the first mold unit (800A), the second mold unit (800B), and the third mold unit (800C) are respectively disposed in order at the first position (P1), the second position (P2), and the third position (P3), and
an adjusting unit (715) that performs adjustment to reduce a time difference among a first time until the first mold unit (800A) moves in the first section (1701) and a second process with respect to the first mold unit (800A) starts at the second position (P2) after a predetermined time elapses from when a first process with respect to the first mold unit (800A) starts at the first position (P1), a second time until the first mold unit (800A) moves in the second section (1702) and a third process with respect to the first mold unit (800A) starts at the third position (P3) after the predetermined time elapses from when the second process with respect to the first mold unit (800A) starts at the second position (P2), and a third time until the first mold unit (800A) moves in the third section (1703) and the first process with respect to the first mold unit (800A) starts at the first position (P1) after the predetermined time elapses from when the third process with respect to the first mold unit (800A) starts at the third position (P3), and
as the adjustment to reduce the time difference, the adjusting unit (715) adjusts a time until the first process, the second process, or the third process starts after the first mold unit (800A) moves to any one of the first position (P1), the second position (P2), and the third position (P3).

## Patentansprüche

1. Spritzgießmaschine (10), umfassend:
einen Drehtisch (121), der sich dreht, während eine erste Formeinheit (800A), eine zweite Formeinheit (800B) und eine dritte Formeinheit (800C) darauf platziert werden;
eine obere Platte (110), die oberhalb des Drehtisches (121) vorgesehen ist;
eine untere Platte (120), die unterhalb des Drehtisches (121) vorgesehen ist; und
eine Steuervorrichtung (700), die den Drehtisch (121) steuert,
**dadurch gekennzeichnet, dass**
die Steuervorrichtung (700) umfasst
eine Drehsteuereinheit (713), die den Drehtisch (121) steuert, sich in eine vorbestimmte Richtung zu drehen, um die erste Formeinheit (800A) in einem ersten Abschnitt (1701) von einer ersten Position (P1) zu einer zweiten Position (P2) zu bewegen, in die vorbestimmte Richtung zu drehen, um die erste Formeinheit (800A) in einem zweiten Abschnitt (1702) von der zweiten Position (P2) zu einer dritten Position (P3) zu bewegen, und in eine Richtung entgegengesetzt zu der vorbestimmten Richtung zu drehen, um die erste Formeinheit (800A) in einem dritten Abschnitt (1703) von der dritten Position (P3) zu der ersten Position (P1) zu bewegen, wenn Drehsteuerung an dem Drehtisch (121) derart durchgeführt wird, dass die erste Formeinheit (800A), die zweite Formeinheit (800B) und die dritte Formeinheit (800C) jeweils in der Reihenfolge an der ersten Position (P1), der zweiten Position (P2) und der dritten Position (P3) angeordnet werden, und
eine Einstelleinheit (715), die Einstellung durchführt, um eine Zeitdifferenz zwischen einer ersten Zeit, bis sich die erste Formeinheit (800A) in dem ersten Abschnitt (1701) bewegt und ein zweiter Prozess in Bezug auf die erste Formeinheit (800A) an der zweiten Position (P2) beginnt, nachdem eine vorbestimmte Zeit verstrichen ist, wenn ein erster Prozess in Bezug auf die erste Formeinheit (800A) an der ersten Position (P1) beginnt, einer zweiten Zeit, bis sich die erste Formeinheit (800A) in dem zweiten Abschnitt (1702) bewegt und ein dritter Prozess in Bezug auf die erste Formeinheit (800A) an der dritten Position (P3) beginnt, nachdem die vorbestimmte Zeit verstrichen ist, wenn der zweite Prozess in Bezug auf die erste Formeinheit (800A) an der zweiten Position (P2) beginnt, und einer dritten Zeit, bis sich die erste Formeinheit (800A) in dem dritten Abschnitt (1703) bewegt und der erste Prozess in Bezug auf die erste Formeinheit (800A) an der ersten Position (P1) beginnt, nachdem die vorbestimmte Zeit verstrichen ist, wenn der dritte Prozess in Bezug auf die erste Formeinheit (800A) an der dritten Position (P3) beginnt, zu verringern und
als die Einstellung zur Verringerung der Zeitdifferenz die Einstelleinheit (715) eine Zeit einstellt, bis Drehsteuerung des Drehtisches (121) nach der vorbestimmten Zeit beginnt, wenn die erste Formeinheit (800A) in einer von der ersten Position (P1), der zweiten Position (P2) und der dritten Position (P3) angeordnet ist.

2. Spritzgießmaschine (10) nach Anspruch 1,
wobei die vorbestimmte Zeit eine längste Zeit unter
einer Zeit, die für den ersten Prozess erforderlich ist, der einen Prozess angibt, der an einer beliebigen Formeinheit von der ersten Formeinheit (800A), der zweiten Formeinheit (800B) und der dritten Formeinheit (800C), die an der ersten Position (P1) angeordnet sind, durchgeführt wird, bis Steuerung zum Vergrößern eines Abstands zwischen der oberen Platte (110) und der unteren Platte (120) abgeschlossen ist, nachdem Steuerung zum Verkleinern des Abstands zwischen der oberen Platte (110) und der unteren Platte (120) beginnt,
einer Zeit, die für den zweiten Prozess erforderlich ist, der einen Prozess angibt, der an einer beliebigen Formeinheit von der ersten Formeinheit (800A), der zweiten Formeinheit (800B) und der dritten Formeinheit (800C), die an der zweiten Position (P2) angeordnet sind, durchgeführt wird, und bewirkt, dass eine beliebige Formeinheit für eine vorbestimmte Zeitspanne bereitsteht, und
einer Zeit, die für den dritten Prozess erforderlich ist, der einen Prozess angibt, der an einer beliebigen Formeinheit von der ersten Formeinheit (800A), der zweiten Formeinheit (800B) und der dritten Formeinheit (800C), die an der dritten Position (P3) angeordnet sind, durchgeführt wird, bis Rückkehrsteuerung einer Auswerfereinheit (200) abgeschlossen ist, nachdem Auswerfsteuerung der Auswerfereinheit (200) beginnt.

3. Spritzgießmaschine (10), umfassend:
einen Drehtisch (121), der sich dreht, während eine erste Formeinheit (800A), eine zweite Formeinheit (800B) und eine dritte Formeinheit (800C) darauf platziert werden;
eine obere Platte (110), die oberhalb des Drehtisches (121) vorgesehen ist;
eine untere Platte (120), die unter dem Drehtisch (121) vorgesehen ist; und
eine Steuervorrichtung (700), die den Drehtisch (121) steuert,
**dadurch gekennzeichnet, dass**
die Steuervorrichtung (700) umfasst
eine Drehsteuereinheit (713), die den Drehtisch (121) steuert, sich in eine vorbestimmte Richtung zu drehen, um die erste Formeinheit (800A) in einem ersten Abschnitt (1701) von einer ersten Position (P1) zu einer zweiten Position (P2) zu bewegen, sich in die vorbestimmte Richtung zu drehen, um die erste Formeinheit (800A) in einem zweiten Abschnitt (1702) von der zweiten Position (P2) zu einer dritten Position (P3) zu bewegen, und sich in eine Richtung entgegengesetzt zu der vorbestimmten Richtung zu drehen, um die erste Formeinheit (800A) in einem dritten Abschnitt (1703) von der dritten Position (P3) zu der ersten Position (P1) zu bewegen, wenn Drehsteuerung an dem Drehtisch (121) derart durchgeführt wird, dass die erste Formeinheit (800A), die zweite Formeinheit (800B) und die dritte Formeinheit (800C) jeweils in der Reihenfolge an der ersten Position (P1), der zweiten Position (P2) und der dritten Position (P3) angeordnet sind, und
eine Einstelleinheit (715), die Einstellung durchführt, um eine Zeitdifferenz zwischen einer ersten Zeit, bis sich die erste Formeinheit (800A) in dem ersten Abschnitt (1701) bewegt und ein zweiter Prozess in Bezug auf die erste Formeinheit (800A) an der zweiten Position (P2) beginnt, nachdem eine vorbestimmte Zeit verstrichen ist, wenn ein erster Prozess in Bezug auf die erste Formeinheit (800A) an der ersten Position (P1) beginnt, einer zweiten Zeit, bis sich die erste Formeinheit (800A) in dem zweiten Abschnitt (1702) bewegt und ein dritter Prozess in Bezug auf die erste Formeinheit (800A) an der dritten Position (P3) beginnt, nachdem die vorbestimmte Zeit verstrichen ist, wenn der zweite Prozess in Bezug auf die erste Formeinheit (800A) an der zweiten Position (P2) beginnt, und einer dritten Zeit, bis sich die erste Formeinheit (800A) in dem dritten Abschnitt (1703) bewegt und der erste Prozess in Bezug auf die erste Formeinheit (800A) an der ersten Position (P1) beginnt, nachdem die vorbestimmte Zeit verstrichen ist, wenn der dritte Prozess in Bezug auf die erste Formeinheit (800A) an der dritten Position (P3) beginnt, zu verringern und
als die Einstellung zur Verringerung der Zeitdifferenz die Einstelleinheit (715) eine Drehgeschwindigkeit des Drehtisches (121) in einem oder mehreren von dem ersten Abschnitt (1701), dem zweiten Abschnitt (1702) und dem dritten Abschnitt (1703) einstellt, in dem sich die erste Formeinheit (800A) bewegt.

4. Spritzgießmaschine (10), umfassend:
einen Drehtisch (121), der sich dreht, während eine erste Formeinheit (800A), eine zweite Formeinheit (800B) und eine dritte Formeinheit (800C) darauf platziert werden;
eine obere Platte (110), die oberhalb des Drehtisches (121) vorgesehen ist;
eine untere Platte (120), die unterhalb des Drehtisches (121) vorgesehen ist; und
eine Steuervorrichtung (700), die den Drehtisch (121) steuert,
**dadurch gekennzeichnet, dass**
die Steuervorrichtung (700) umfasst
eine Drehsteuereinheit (713), die den Drehtisch (121) steuert, sich in eine vorbestimmte Richtung zu drehen, um die erste Formeinheit (800A) in einem ersten Abschnitt (1701) von einer ersten Position (P1) zu einer zweiten Position (P2) zu bewegen, sich in die vorbestimmte Richtung zu drehen, um die erste Formeinheit (800A) in einem zweiten Abschnitt (1702) von der zweiten Position (P2) zu einer dritten Position (P3) zu bewegen, und sich in eine Richtung entgegengesetzt zu der vorbestimmten Richtung zu drehen, um die erste Formeinheit (800A) in einem dritten Abschnitt (1703) von der dritten Position (P3) zu der ersten Position (P1) zu bewegen, wenn Drehsteuerung an dem Drehtisch (121) derart durchgeführt wird, dass die erste Formeinheit (800A), die zweite Formeinheit (800B) und die dritte Formeinheit (800C) jeweils in der Reihenfolge an der ersten Position (P1), der zweiten Position (P2) und der dritten Position (P3) angeordnet sind, und
eine Einstelleinheit (715), die Einstellung durchführt, um eine Zeitdifferenz zwischen einer ersten Zeit, bis sich die erste Formeinheit (800A) in dem ersten Abschnitt (1701) bewegt und ein zweiter Prozess in Bezug auf die erste Formeinheit (800A) an der zweiten Position (P2) beginnt, nachdem eine vorbestimmte Zeit verstrichen ist, wenn ein erster Prozess in Bezug auf die erste Formeinheit (800A) an der ersten Position (P1) beginnt, einer zweiten Zeit, bis sich die erste Formeinheit (800A) in dem zweiten Abschnitt (1702) bewegt und ein dritter Prozess in Bezug auf die erste Formeinheit (800A) an der dritten Position (P3) beginnt, nachdem die vorbestimmte Zeit verstrichen ist, wenn der zweite Prozess in Bezug auf die erste Formeinheit (800A) an der zweiten Position (P2) beginnt, und einer dritten Zeit, bis sich die erste Formeinheit (800A) in dem dritten Abschnitt (1703) bewegt und der erste Prozess in Bezug auf die erste Formeinheit (800A) an der ersten Position (P1) beginnt, nachdem die vorbestimmte Zeit verstrichen ist, wenn der dritte Prozess in Bezug auf die erste Formeinheit (800A) an der dritten Position (P3) beginnt, zu verringern und
als Einstellung zur Verringerung der Zeitdifferenz die Einstelleinheit (715) eine Zeit einstellt, bis der erste Prozess, der zweite Prozess oder der dritte Prozess beginnt, nachdem sich die erste Formeinheit (800A) zu einer beliebigen von der ersten Position (P1), der zweiten Position (P2) und der dritten Position (P3) bewegt.

## Revendications

1. Une machine de moulage par injection (10) comprenant :
une table pivotante (121) qui tourne pendant qu'une première unité de moule (800A), une seconde unité de moule (800B) et une troisième unité de moule (800C) sont placées dessus ;
un plateau supérieur (110) prévu au-dessus du plateau pivotant (121) ;
un plateau inférieur (120) prévu sous le plateau pivotant (121) ;
et
un dispositif de commande (700) qui contrôle la table pivotante (121),
**caractérisée en ce que**
le dispositif de commande (700) comprend une unité de commande de rotation (713) qui contrôle la table pivotante (121) pour tourner dans une direction prédéterminée de façon à déplacer la première unité de moule (800A) dans une première section (1701) entre une première position (P1) et une seconde position (P2), afin qu'il tourne dans la direction prédéterminée de façon à déplacer la première unité de moule (800A) dans la seconde section (1702) entre la seconde position (P2) et une troisième position (P3), et afin pour tourner dans une direction opposée à la direction prédéterminée de façon à déplacer la première unité de moule (800A) dans une troisième section (1703) entre la troisième position (P3) et la première position (P1), lorsque la commande de rotation est exécutée sur le plateau pivotant (121) de sorte que la première unité de moule (800A), la seconde unité de moule (800B) et la troisième unité de moule (800C) soient respectivement disposées dans cet ordre dans la première position (P1), la seconde position (P2) et la troisième position (P3), et
une unité de réglage (715) qui effectue un réglage afin de réduire une différence de durée parmi une première durée jusqu'à ce que la première unité de moule (800A) se déplace dans la première section (1701) et qu'un second processus débute par rapport à la première unité de moule (800A) dans la seconde position (P2) une fois qu'une durée prédéterminée s'est écoulée depuis le moment où un premier processus par rapport à la première unité de moule (800A) a débuté dans la première position (P1), une seconde durée jusqu'à ce que la première unité de moule (800A) se déplace dans la seconde section (1702) et qu'un troisième processus par rapport à la première unité de moule (800A) débute dans la troisième position (P3) une fois que la durée prédéterminée s'est écoulée depuis le moment où le second processus par rapport à la première unité de moule (800A) a débuté dans la seconde position (P2), et une troisième durée jusqu'à ce que la première unité de moule (800A) se déplace dans la troisième section (1703) et que le premier processus par rapport à la première unité de moule (800A) débute dans la première position (P1) une fois que la durée prédéterminée s'est écoulée depuis le moment où le troisième processus par rapport à la première unité de moule (800A) a débuté dans la troisième position (P3), et
en guise de réglage destiné à réduire la différence de durée, l'unité de réglage (715) règle une durée jusqu'à ce que le contrôle de rotation de la table pivotante (121) débute après la durée prédéterminée, lorsque la première unité de moule (800A) est disposée dans n'importe laquelle de la première position (P1), de la seconde position (P2) et de la troisième position (P3).

2. La machine de moulage par injection (10) selon la revendication 1,
dans laquelle la durée prédéterminée est une durée la plus longue parmi
une durée nécessaire pour le premier processus qui indique un processus exécuté sur n'importe quelle unité de moule parmi la première unité de moule (800A), de la seconde unité de moule (800B) et de la troisième unité de moule (800C) qui sont disposées dans la première position (P1), jusqu'à ce qu'une commande destinée à augmenter une distance entre le plateau supérieur (110) et le plateau inférieur (120) soit terminée une fois que la commande de réduction de la distance entre le plateau supérieur (110) et le plateau inférieur (120) a débuté,
une durée nécessaire pour le second processus qui indique un processus exécuté sur n'importe quelle unité de moule parmi la première unité de moule (800A), la seconde unité de moule (800B) et la troisième unité de moule (800C) qui sont disposées dans la seconde position (P2), et qui provoque le fait que n'importe quelle unité de moule soit mise en attente pendant une durée prédéterminée,
et
une durée nécessaire pour le troisième processus qui indique un processus exécuté sur n'importe quelle unité de moule parmi la première unité de moule (800A), la seconde unité de moule (800B) et la troisième unité de moule (800C) qui sont disposées dans la troisième position (P3), jusqu'à ce que la commande de retour d'une unité d'éjecteur (200) soit terminée une fois que la commande d'éjection de l'unité d'éjecteur (200) a débuté.

3. Une machine de moulage par injection (10) comprenant :
une table pivotante (121) qui tourne pendant qu'une première unité de moule (800A), une seconde unité de moule (800B) et une troisième unité de moule (800C) sont placées dessus ;
un plateau supérieur (110) prévu au-dessus de la table pivotante (121) ;
un plateau inférieur (120) prévu sous la table pivotante (121) ;
et
un dispositif de commande (700) qui contrôle la table pivotante (121),
**caractérisée en ce que**
le dispositif de commande (700) comprend une unité de commande de rotation (713) qui contrôle le plateau pivotant (121) pour tourner dans une direction prédéterminée de façon à déplacer la première unité de moule (800A) dans une première section (1701) entre une première position (P1) et une seconde position (P2), afin qu'il tourne dans la direction prédéterminée de façon à déplacer la première unité de moule (800A) dans la seconde section (1702) entre la seconde position (P2) et une troisième position (P3), et pour toruner dans une direction opposée à la direction prédéterminée de façon à déplacer la première unité de moule (800A) dans une troisième section (1703) entre la troisième position (P3) et la première position (P1), lorsque la commande de rotation est exécutée sur le plateau pivotant (121) de sorte que la première unité de moule (800A), la seconde unité de moule (800B) et la troisième unité de moule (800C) soient respectivement disposées dans cet ordre dans la première position (P1), la seconde position (P2) et la troisième position (P3), et
une unité de réglage (715) qui effectue un réglage afin de réduire une différence de durée parmi une première durée jusqu'à ce que la première unité de moule (800A) se déplace dans la première section (1701) et qu'un second processus débute par rapport à la première unité de moule (800A) dans la seconde position (P2) une fois qu'une durée prédéterminée s'est écoulée depuis le moment où un premier processus par rapport à la première unité de moule (800A) a débuté dans la première position (P1), une seconde durée jusqu'à ce que la première unité de moule (800A) se déplace dans la seconde section (1702) et qu'un troisième processus par rapport à la première unité de moule (800A) débute dans la troisième position (P3) une fois que la durée prédéterminée s'est écoulée depuis le moment où le second processus par rapport à la première unité de moule (800A) a débuté dans la seconde position (P2), et une troisième durée jusqu'à ce que la première unité de moule (800A) se déplace dans la troisième section (1703) et que le premier processus par rapport à la première unité de moule (800A) débute dans la première position (P1) une fois que la durée prédéterminée s'est écoulée depuis le moment où le troisième processus par rapport à la première unité de moule (800A) a débuté dans la troisième position (P3), et
en guise de réglage destiné à réduire la différence de durée, l'unité de réglage (715) règle une vitesse de rotation de la table pivotante (121) dans une ou plusieurs de la première section (1701), de la seconde section (1702) et de la troisième section (1703) dans laquelle la première unité de moule (800A) se déplace.

4. Une machine de moulage par injection (10) comprenant :
une table pivotante (121) qui tourne pendant qu'une première unité de moule (800A), une seconde unité de moule (800B) et une troisième unité de moule (800C) sont placées dessus ;
un plateau supérieur (110) prévu au-dessus du plateau pivotant (121) ;
un plateau inférieur (120) prévu sous le plateau pivotant (121) ;
et
un dispositif de commande (700) qui contrôle la table pivotante (121),
**caractérisée en ce que**
le dispositif de commande (700) comprend une unité de commande de rotation (713) qui contrôle la table pivotante (121) pour tourner dans une direction prédéterminée de façon à déplacer la première unité de moule (800A) dans une première section (1701) entre une première position (P1) et une seconde position (P2), afin qu'il tourne dans la direction prédéterminée de façon à déplacer la première unité de moule (800A) dans une seconde section (1702) entre la seconde position (P2) et une troisième position (P3), et pour toruner dans une direction opposée à la direction prédéterminée de façon à déplacer la première unité de moule (800A) dans une troisième section (1703) entre la troisième position (P3) et la première position (P1), lorsque la commande de rotation est exécutée sur le plateau pivotant (121) de sorte que la première unité de moule (800A), la seconde unité de moule (800B) et la troisième unité de moule (800C) soient respectivement disposées dans cet ordre dans la première position (P1), la seconde position (P2) et la troisième position (P3), et
une unité de réglage (715) qui effectue un réglage afin de réduire une différence de durée parmi une première durée jusqu'à ce que la première unité de moule (800A) se déplace dans la première section (1701) et qu'un second processus débute par rapport à la première unité de moule (800A) dans la seconde position (P2) une fois qu'une durée prédéterminée s'est écoulée depuis le moment où un premier processus par rapport à la première unité de moule (800A) a débuté dans la première position (P1), une seconde durée jusqu'à ce que la première unité de moule (800A) se déplace dans la seconde section (1702) et qu'un troisième processus par rapport à la première unité de moule (800A) débute dans la troisième position (P3) une fois que la durée prédéterminée s'est écoulée depuis le moment où le second processus par rapport à la première unité de moule (800A) a débuté dans la seconde position (P2), et une troisième durée jusqu'à ce que la première unité de moule (800A) se déplace dans la troisième section (1703) et que le premier processus par rapport à la première unité de moule (800A) débute dans la première position (P1) une fois que la durée prédéterminée s'est écoulée depuis le moment où le troisième processus par rapport à la première unité de moule (800A) a débuté dans la troisième position (P3), et
en guise de réglage destiné à réduire la différence de durée, l'unité de réglage (715) règle une durée jusqu'à ce que le premier processus, le second processus ou le troisième processus débute une fois que la première unité de moule (800A) s'est déplacée vers n'importe laquelle de la première position (P1), de la seconde position (P2) et de la troisième position (P3).
